# EUROPEAN PATENT APPLICATION

(11) **EP 4 376 456 A1**
(43) Date of publication of application: **29.05.2024**
(21) Application number: 22851793.4
(22) Date of filing: 04.07.2022
(51) Int. Cl.: H04W 8/14, H04W 60/04, H04W 60/06

(54) **DEREGISTRATION METHOD AND COMMUNICATION APPARATUS**

(30) Priority: 06.08.2021 CN 202110902610
(71) Applicant: Huawei Technologies Co., Ltd., Shenzhen, Guangdong 518129 (CN)
(72) Inventor: ZHU, Qianghua, Shenzhen, Guangdong 518129 (CN); WU, Wenfu, Shenzhen, Guangdong 518129 (CN)
(74) Representative: Pfenning, Meinig & Partner mbB
(86) International application number: PCT/CN2022/103609
(87) International publication number: WO 2023/011078

(57) **Abstract**

This application provides a deregistration method and a communication apparatus. The method may include: receiving a first message sent by a first mobility management network element, where the first message carries first information, and the first information is onboarding indication information or time information of a first deregistration timer on the first mobility management network element; starting a second deregistration timer based on the first information; and upon expiry of the second deregistration timer, triggering a deregistration procedure, to deregister a terminal device from a network. In this application, after mobility management network element redirection, the first information is transferred to a mobility management network element that supports onboarding, so that the deregistration timer can still be started on the new mobility management network element that supports onboarding. Upon expiry of the deregistration timer, the deregistration procedure is triggered to deregister the terminal device from the network, to prevent the terminal device from camping on the network indefinitely.

## Description

This application claims priority to Chinese Patent Application No. 202110902610.0, filed with the China National Intellectual Property Administration on August 6, 2021 and entitled "DEREGISTRATION METHOD AND COMMUNICATION APPARATUS", which is incorporated herein by reference in its entirety.

### TECHNICAL FIELD

This application relates to the field of communication technologies, and in particular, to a deregistration method and a communication apparatus.

### BACKGROUND

The R17 phase standard supports a terminal device in registering with an onboarding standalone non-public network (Onboarding standalone non-public network, ON-SNPN) for SNPN onboarding (onboarding) by using a credential of a default credential server (default credential server, DCS). After successful registration, the terminal device obtains initial access to the ON-SNPN, and an AMF network element starts a deregistration timer. After the deregistration timer expires, the terminal device is triggered to be deregistered from the ON-SNPN, to prevent the terminal device from camping on the ON-SNPN indefinitely.

When the terminal device registered with the ON-SNPN for onboarding moves in the ON-SNPN, AMF redirection may occur. After AMF redirection, how to start a deregistration timer on the new AMF to prevent the terminal device from camping on the ON-SNPN indefinitely is an urgent problem to be resolved.

### SUMMARY

This application provides a deregistration method and a communication apparatus, so that a new AMF starts a deregistration timer after AMF redirection resulting from movement of a terminal device registered with an ON-SNPN for onboarding, to prevent the terminal device from camping on the ON-SNPN indefinitely.

According to a first aspect, a deregistration method is provided. The method may be performed by a network device, or may be performed by a chip or a circuit used in the network device. This is not limited in this application. For ease of description, an example in which the method is performed by a second mobility management network element is used below for description.

The method may include: The second mobility management network element receives a first message sent by a first mobility management network element. The first message carries first information, and the first information is onboarding (onboarding) indication information or time information of a first deregistration timer on the first mobility management network element. The second mobility management network element starts a second deregistration timer based on the first information. When the second deregistration timer expires, a deregistration procedure is triggered to deregister a terminal device from a network.

Specifically, the onboarding indication information indicates that the terminal device is performing onboarding registration, or indicates that the terminal device is a terminal device registered for onboarding. The time information of the first deregistration timer on the first mobility management network element indicates elapsed time or remaining time of the first deregistration timer on the first mobility management network element.

Optionally, the first message may be specifically a retrieve UE context response message, a UE context establishment request message, or an N2 message notification acknowledge message. This is not limited in this embodiment of this application.

According to the deregistration method in this embodiment of this application, the second mobility management network element obtains the time information of the first deregistration timer on the first mobility management network element or the onboarding indication information from the first mobility management network element, so that the second mobility management network element can still start the deregistration timer after mobility management network element redirection. After the deregistration timer expires, the deregistration procedure is triggered to deregister registration information of the terminal device on an ON-SNPN, and PDU session release is triggered, to prevent the terminal device from camping on the ON-SNPN indefinitely.

With reference to the first aspect, in some implementations of the first aspect, the method further includes: The second mobility management network element starts the second deregistration timer based on the remaining time of the first deregistration timer on the first mobility management network element.

With reference to the first aspect, in some implementations of the first aspect, the method further includes: When the time information of the first deregistration timer on the first mobility management network element indicates the elapsed time of the first deregistration timer on the first mobility management network element, the remaining time of the first deregistration timer on the first mobility management network element is determined based on the time information of the first deregistration timer on the first mobility management network element and a local configuration. Specifically, remaining time of a deregistration timer is determined based on the time information of the first deregistration timer on the first mobility management network element and an initial value of the deregistration timer in the local configuration. The initial value is total execution duration of the deregistration timer. The initial value also represents maximum duration that is allowed by the ON-SNPN to camp on the ON-SNPN by each terminal device registered for onboarding. For each mobility management network element supporting onboarding, initial values in local configuration information of the mobility management network elements are the same.

It should be understood that the second mobility management network element may start the second deregistration timer based on the first information, and starting the second deregistration timer may be understood that the second mobility management network element starts the second deregistration timer based on the time information of the first deregistration timer on the first mobility management network element and executes the remaining time of the first deregistration timer on the first mobility management network element, or may be understood that the second mobility management network element starts the second deregistration timer based on the onboarding indication information.

With reference to the first aspect, in some implementations of the first aspect, the method further includes: The second mobility management network element starts the second deregistration timer based on the onboarding indication information.

According to the deregistration method in this embodiment of this application, the second mobility management network element obtains the time information of the first deregistration timer on the first mobility management network element or the onboarding indication information from the first mobility management network element, so that the second mobility management network element can still start the deregistration timer after mobility management network element redirection. After the deregistration timer expires, the deregistration procedure is triggered to deregister registration information of the terminal device on an ON-SNPN, and PDU session release is triggered, to prevent the terminal device from camping on the ON-SNPN indefinitely.

With reference to the first aspect, in some implementations of the first aspect, the method further includes: Before receiving the first message sent by the first mobility management network element, the second mobility management network element sends a second message to the first mobility management network element. The second message carries onboarding capability information of the second mobility management network element. The onboarding capability information of the second mobility management network element indicates whether the second mobility management network element supports onboarding.

It should be understood that the first message may be specifically a retrieve UE context response message, a UE context establishment request message, or an N2 message notification acknowledge message. This is not limited in this embodiment of this application. The second message may be specifically a retrieve UE context request message or a UE context establishment response message. This is not limited in this embodiment of this application.

With reference to the first aspect, in some implementations of the first aspect, the method further includes: When the first information is the time information of the first deregistration timer on the first mobility management network element, before sending the second message to the first mobility management network element, the second mobility management network element receives an N2 message sent by an access network element. The N2 message carries the onboarding indication information and a registration request. The onboarding indication information indicates that the terminal device is performing the onboarding registration, or indicates that the terminal device is the terminal device registered for onboarding. The registration request indicates that the terminal device requests to register with the second mobility management network element.

With reference to the first aspect, in some implementations of the first aspect, the method further includes: The second mobility management network element sends a registration response message to the terminal device after starting the second deregistration timer based on the first information. The registration response message indicates that the terminal device successfully registers with the second mobility management network element.

According to the deregistration method in this embodiment of this application, the second mobility management network element sends the onboarding capability information of the second mobility management network element to the first mobility management network element, so that the first mobility management network element can determine that the second mobility management network element supports onboarding, to send the onboarding indication information or the time information of the first deregistration timer on the first mobility management network element to the second mobility management network element. After mobility management network element redirection, the second mobility management network element can start the deregistration timer. After the deregistration timer expires, the deregistration procedure is triggered to deregister registration information of the terminal device on an ON-SNPN, and PDU session release is triggered, to prevent the terminal device from camping on the ON-SNPN indefinitely.

With reference to the first aspect, in some implementations of the first aspect, the method further includes: sending a first request message to a network repository network element, where the first request message requests to register identification information and onboarding capability information that are of a mobility management network element in the network repository network element, or the first request message requests to update the identification information and the onboarding capability information that are of the mobility management network element in the network repository network element; and receiving a first response message sent by the network repository network element, where the first response message indicates that the network repository network element has accepted the first request message.

Optionally, the first request message may be an NF registration request message or an NF update request message, and the first response message may be an NF registration response message or an NF update response message.

Optionally, the identification information of the mobility management network element may be a fully qualified domain name (Fully Qualified Domain Name, FQDN), a globally unique identifier (Globally Unique AMF Identifier, GUAMI), an IP address, or the like. This is not limited in this embodiment of this application.

It should be understood that, when the network repository network element does not have the onboarding capability information of the second mobility management network element, the NF registration request message requests to add the onboarding capability information of the second mobility management network element to NF profile information of the network repository network element. When the onboarding capability information of the second mobility management network element already exists in the network repository network element, but a state in which the second mobility management network element supports onboarding changes, the NF update request message requests to update the onboarding capability information of the second mobility management network element in the NF profile information of the network repository network element.

According to the deregistration method in this embodiment of this application, the second mobility management network element stores or updates the onboarding capability information of the second mobility management network element in the network repository network element, so that the first mobility management network element can discover and select, by querying the network repository network element, the second mobility management network element that supports onboarding, to send the onboarding indication information or the time information of the deregistration timer on the first mobility management network element to the second mobility management network element. After mobility management network element redirection, the deregistration timer can still be executed on the second mobility management network element. After the deregistration timer expires, the deregistration procedure is triggered to deregister registration information of the terminal device on an ON-SNPN, and PDU session release is triggered, to prevent the terminal device from camping on the ON-SNPN indefinitely.

It should be understood that the first mobility management network element may be an old AMF network element or an S-AMF network element, the second mobility management network element may be a new AMF network element or a T-AMF network element, the network repository network element may be an NRF network element, and the access network element may be a RAN network element. In a 5G network and another future network, the foregoing network elements may also have other names. This is not specifically limited in this embodiment of this application. For example, in a 6G network, some or all of the foregoing network elements may continue to use terms in 5G, or may use other names. This is not limited in this embodiment of this application.

According to a second aspect, a deregistration method is provided. The method may be performed by a network device, or may be performed by a chip or a circuit used in the network device. This is not limited in this application. For ease of description, an example in which the method is performed by a first mobility management network element is used below for description.

The method may include: The first mobility management network element determines that a second mobility management network element supports onboarding. The first mobility management network element sends a first message to the second mobility management network element. The first message carries first information, and the first information is onboarding (onboarding) indication information or time information of a first deregistration timer on the first mobility management network element.

Specifically, the onboarding indication information indicates that a terminal device is performing onboarding registration, or indicates that the terminal device is a terminal device registered for onboarding. The time information of the first deregistration timer on the first mobility management network element indicates elapsed time or remaining time of the first deregistration timer on the first mobility management network element.

Optionally, the first message may be specifically a retrieve UE context response message, a UE context establishment request message, or an N2 message notification acknowledge message. This is not limited in this embodiment of this application.

According to the deregistration method in this embodiment of this application, the first mobility management network element sends the time information of the first deregistration timer on the first mobility management network element or the onboarding indication information to the second mobility management network element that supports onboarding, so that the second mobility management network element can still start the deregistration timer after mobility management network element redirection. After the deregistration timer expires, a deregistration procedure is triggered to deregister registration information of the terminal device on an ON-SNPN, and PDU session release is triggered, to prevent the terminal device from camping on the ON-SNPN indefinitely.

With reference to the second aspect, in some implementations of the second aspect, the method further includes: determining, based on whether the first mobility management network element has started the first deregistration timer, specific content of the first information carried in the first message sent by the first mobility management network element to the second mobility management network element.

With reference to the second aspect, in some implementations of the second aspect, the method further includes: If the first mobility management network element has started the first deregistration timer, the first information carried in the first message sent by the first mobility management network element to the second mobility management network element is the time information of the first deregistration timer on the first mobility management network element. The time information of the first deregistration timer on the first mobility management network element indicates the elapsed time of the first deregistration timer on the first mobility management network element, or indicates the remaining time of the first deregistration timer on the first mobility management network element.

With reference to the second aspect, in some implementations of the second aspect, the method further includes: If the first mobility management network element has not started the first deregistration timer, the first information carried in the first message sent by the first mobility management network element to the second mobility management network element is the onboarding indication information. The onboarding indication information indicates that the terminal device is performing the onboarding registration, or indicates that the terminal device is the terminal device registered for onboarding.

With reference to the second aspect, in some implementations of the second aspect, the method further includes: The first mobility management network element receives a second message sent by the second mobility management network element. The second message carries onboarding capability information of the second mobility management network element. The onboarding capability information of the second mobility management network element indicates whether the mobility management network element supports onboarding. The first mobility management network element determines, based on the onboarding capability information of the second mobility management network element, that the second mobility management network element supports onboarding.

With reference to the second aspect, in some implementations of the second aspect, the method further includes: The first mobility management network element queries local configuration information, and determines, based on the onboarding capability information of the second mobility management network element in the local configuration information, that the second mobility management network element supports onboarding.

With reference to the second aspect, in some implementations of the second aspect, the method further includes: The first mobility management network element obtains the onboarding indication information. The onboarding indication information indicates that the terminal device is performing the onboarding registration, or indicates that the terminal device is the terminal device registered for onboarding. The first mobility management network element selects, based on the onboarding indication information, the second mobility management network element that supports onboarding.

With reference to the second aspect, in some implementations of the second aspect, the method further includes: The first mobility management network element selects, based on the received onboarding indication information and the local configuration information, the second mobility management network element that supports onboarding.

With reference to the second aspect, in some implementations of the second aspect, the method further includes: After the first mobility management network element obtains the onboarding indication information, the first mobility management network element sends a second request message to a network repository network element. The second request message carries the onboarding indication information. The second request message requests to search the network repository network element for instance information of a mobility management network element supporting onboarding. The onboarding indication information indicates that the terminal device is performing the onboarding registration, or indicates that the terminal device is the terminal device registered for onboarding. The first mobility management network element receives a second response message sent by the network repository network element. The second response message carries the instance information that is of the mobility management network element supporting onboarding and that is found by the network repository network element. The instance information of the mobility management network element supporting onboarding includes instance information of the second mobility management network element. The first mobility management network element selects the second mobility management network element from the instance information of the mobility management network element supporting onboarding.

Specifically, the second request message may be an NF discovery request message, and the second response message may be an NF discovery response message. Alternatively, the second request message and the second response message may be other messages. This is not limited in this embodiment of this application.

With reference to the second aspect, in some implementations of the second aspect, the method further includes: The first mobility management network element obtains the onboarding indication information by obtaining a UE context.

With reference to the second aspect, in some implementations of the second aspect, the method further includes: Before obtaining the onboarding indication information from the UE context, the first mobility management network element stores the onboarding indication information in the UE context based on the onboarding indication information obtained from an N2 or N14 message, or based on a registration type of "SNPN onboarding (SNPN onboarding)".

It should be understood that, when the first mobility management network element receives the N2 message, or obtains the onboarding indication information from information about the registration type of "SNPN onboarding (SNPN onboarding)", no mobility management network element redirection occurs at that time. In this case, the onboarding indication information needs to be stored in the context first. When the mobility management network element is redirected, the onboarding indication information is obtained from the UE context. Alternatively, when AMF redirection has occurred, the N14 message is received, and the onboarding indication information is stored in the UE context first for subsequent use of the onboarding indication information in the N14 message.

It should be noted that, when the terminal device moves after registration with an ON-SNPN for onboarding, an original mobility management network element cannot continue serving the terminal device. In this case, a new mobility management network element needs to be selected, that is, mobility management network element redirection is required. Optionally, the mobility management network element redirection process may occur in a mobility registration process of the terminal device, in other words, the terminal device is in an idle state. In this case, selection of the second mobility management network element is performed by an access network element, and the first mobility management network element transmits the first information to the second mobility management network element only after determining that the second mobility management network element supports onboarding. Alternatively, the mobility management network element redirection process may occur in a handover process, in other words, the terminal device is in a connected state. In this case, selection of the second mobile network element is performed by the first mobility management network element, the first mobility management network element can directly select the second mobility management network element that supports onboarding during selection of the second mobile network element, and transmits the first information to the second mobility management network element. That is, the additional step of determining whether the second mobility management network element supports onboarding is not required in this case.

According to the deregistration method in this embodiment of this application, the first mobility management network element sends the onboarding indication information or the time information of the first deregistration timer on the first mobility management network element to the second mobility management network element that supports onboarding, so that the second mobility management network element can obtain the onboarding indication information or the time information of the first deregistration timer on the first mobility management network element after mobility management network element redirection, and start the deregistration timer. After the deregistration timer expires, the deregistration procedure is triggered to deregister the registration information of the terminal device on the ON-SNPN, and the PDU session release is triggered, to prevent the terminal device from camping on the ON-SNPN indefinitely.

According to a third aspect, a deregistration method is provided. The method may include: A network repository network element receives a first request message sent by a second mobility management network element. The first request message requests to register identification information and onboarding capability information that are of a mobility management network element in the network repository network element, or the first request message requests to update the identification information and the onboarding capability information that are of the mobility management network element in the network repository network element. The network repository network element stores the identification information of the mobility management network element and onboarding capability information of the second mobility management network element in an NF profile based on the first request message. The network repository network element sends a first response message to the second mobility management network element. The first response message indicates that the network repository network element has accepted the first request message.

Optionally, the first request message may be an NF registration request message or an NF update request message, and the first response message may be an NF registration response message or an NF update response message.

Optionally, the identification information of the mobility management network element may be a fully qualified domain name (Fully Qualified Domain Name, FQDN), a globally unique identifier (Globally Unique AMF Identifier, GUAMI), an IP address, or the like. This is not limited in this embodiment of this application.

It should be understood that, when the network repository network element does not have the onboarding capability information of the second mobility management network element, the NF registration request message requests to add the onboarding capability information of the second mobility management network element to NF profile information of the network repository network element. When the onboarding capability information of the second mobility management network element already exists in the network repository network element, but a state in which the second mobility management network element supports onboarding changes, the NF update request message requests to update the onboarding capability information of the second mobility management network element in the NF profile information of the network repository network element.

With reference to the third aspect, in some implementations of the third aspect, the method further includes: The network repository network element receives a second request message sent by a first mobility management network element. The second request message carries onboarding indication information. The second request message requests to search the network repository network element for instance information of a mobility management network element supporting onboarding. The onboarding indication information indicates that a terminal device is performing onboarding registration, or indicates that the terminal device is a terminal device registered for onboarding. The network repository network element queries, based on the NF profile, the instance information of the mobility management network element supporting onboarding. The instance information of the mobility management network element supporting onboarding includes instance information of the second mobility management network element. The network repository network element sends a second response message to the first mobility management network element. The second response message carries the instance information that is of the mobility management network element supporting onboarding and that is found by the network repository network element.

Specifically, the second request message may be an NF discovery request message, and the second response message may be an NF discovery response message. Alternatively, the second request message and the second response message may be other messages. This is not limited in this embodiment of this application.

According to the deregistration method in this embodiment of this application, the second mobility management network element stores or updates the onboarding capability information of the second mobility management network element in the network repository network element, so that the first mobility management network element can discover and select, by querying the network repository network element, the second mobility management network element that supports onboarding, to send the onboarding indication information or time information of a first deregistration timer on the first mobility management network element to the second mobility management network element. After mobility management network element redirection, the second mobility management network element can start the deregistration timer. After the deregistration timer expires, a deregistration procedure is triggered to deregister registration information of the terminal device on an ON-SNPN, and PDU session release is triggered, to prevent the terminal device from camping on the ON-SNPN indefinitely.

According to a fourth aspect, a deregistration method is provided. The method may include: An access network element receives a third message sent by a terminal. The third message carries onboarding indication information and a registration request. The onboarding indication information indicates that a terminal device is performing onboarding registration, or indicates that the terminal device is a terminal device registered for onboarding. The access network element selects a second mobility management network element based on the onboarding indication information, and sends an N2 message to the second mobility management network element. The N2 message carries the onboarding indication information and the registration request.

Optionally, the third message may be an access network (Access Network, AN) message or a radio resource control (Radio Resource Control, RRC) message. This is not limited in this application.

Specifically, the access network element sends the N2 message carrying the onboarding indication information to the second mobility management network element, so that the second mobility management network element learns that the terminal device is performing the onboarding registration, or that the terminal device is the device that has been registered for onboarding, to transfer onboarding capability information of the second mobility management network element to a first mobility management network element.

According to a fifth aspect, a communication apparatus is provided. The apparatus is configured to perform the method according to any one of the possible implementations of the first aspect to the fourth aspect. Specifically, the apparatus may include units and/or modules configured to perform the methods provided in the first aspect to the fourth aspect, for example, a processing unit and/or a transceiver unit.

In an implementation, the apparatus is a network device. When the apparatus is the network device, the transceiver unit may be a transceiver or an input/output interface, and the processing unit may be a processor.

In another implementation, the apparatus is a chip, a chip system, or a circuit used in the network device. When the apparatus is a chip, a chip system, or a circuit used in a communication device, the transceiver unit may be an input/output interface, an interface circuit, an output circuit, an input circuit, a pin, a related circuit, or the like on the chip, the chip system, or the circuit, and the processing unit may be a processor, a processing circuit, a logic circuit, or the like.

Optionally, the transceiver may be a transceiver circuit. Optionally, the input/output interface may be an input/output circuit.

According to a sixth aspect, a communication apparatus is provided. The apparatus includes: a memory, configured to store a program; and a processor, configured to execute the program stored in the memory. When the program stored in the memory is executed, the processor is configured to perform the method according to any one of the possible implementations of the first aspect to the fourth aspect.

In an implementation, the apparatus is a terminal device or a network device.

In another implementation, the apparatus is a chip, a chip system, or a circuit used in the terminal device or the network device.

According to a seventh aspect, this application provides a processor, configured to perform the method according to any one of the possible implementations of the first aspect to the fourth aspect. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to a transceiver, so that the transceiver transmits the information. After the foregoing information is output by the processor, other processing may further need to be performed on the information before the information reaches the transceiver. Similarly, when the processor receives the foregoing inputted information, the transceiver obtains/receives the foregoing information, and inputs the foregoing information into the processor. Further, after the transceiver receives the foregoing information, other processing may need to be performed on the information before the information is inputted into the processor.

Based on the foregoing principle, for example, the onboarding indication information and the time information of the first deregistration timer on the first mobility management network element that are mentioned in the foregoing method may be understood as that the processor receives input information.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specifically configured to perform these methods, or may be a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to an eighth aspect, a computer-readable storage medium is provided. The computer-readable medium stores program code executed by a device, and the program code includes instructions for performing any one of the possible implementations of the first aspect to the fourth aspect.

According to a ninth aspect, a computer program product including instructions is provided. When the computer program product runs on a computer, the computer is enabled to perform the method according to any one of the possible implementations of the first aspect to the fourth aspect.

According to a tenth aspect, a chip is provided. The chip includes a processor and a communication interface. The processor reads, through the communication interface, instructions stored in a memory, to perform the method according to any one of the possible implementations of the first aspect to the fourth aspect.

Optionally, in an implementation, the chip may further include the memory. The memory stores the instructions. The processor is configured to execute the instructions stored in the memory. When the instructions are executed, the processor is configured to perform the method according to any one of the possible implementations of the first aspect to the fourth aspect.

According to an eleventh aspect, a communication system is provided. The system includes a mobility management network element. The mobility management network element may be configured to perform steps performed by a mobility management network element in the first aspect, the second aspect, and any method in the first aspect and the second aspect.

In some possible implementations, the system may further include an access network element. The access network element may be configured to perform steps performed by the access network element in the third aspect and any method in the third aspect.

In some possible implementations, the system may further include a network repository network element. The network repository network element may be configured to perform steps performed by the network repository network element in the fourth aspect and any method in the fourth aspect.

In some possible implementations, the system may further include another device that interacts with one or more of the mobility management network element, the access network element, and the network repository network element in the solutions provided in embodiments of this application. The system includes the foregoing network devices, for example, the first mobility management network element and the second mobility management network element (for example, an AMF), and for another example, the access network element and the network repository network element (for example, a RAN and an NRF).

### BRIEF DESCRIPTION OF DRAWINGS

FIG. 1 is a schematic diagram of a system architecture used in an embodiment of this application;
FIG. 2 is a schematic diagram of a simplified architecture of a 5G mobile communication system;
FIG. 3 is a schematic diagram of an architecture of a 5G mobile communication system;
FIG. 4 is a schematic diagram of a non-public network used in an embodiment of this application;
FIG. 5 is a schematic diagram of an architecture of an onboarding system used in a method according to an embodiment of this application;
FIG. 6 is a schematic flowchart of a deregistration method according to an embodiment of this application;
FIG. 7 is a schematic flowchart of a deregistration method according to an embodiment of this application;
FIG. 8 is a schematic flowchart of a deregistration method according to an embodiment of this application;
FIG. 9 is a schematic flowchart of another deregistration method according to an embodiment of this application;
FIG. 10A and FIG. 10B are a schematic flowchart of another deregistration method at a handover preparation phase according to an embodiment of this application;
FIG. 11A to FIG. 11C are a schematic flowchart of another deregistration method at a handover execution phase according to an embodiment of this application;
FIG. 12 is a schematic flowchart of still another deregistration method according to an embodiment of this application;
FIG. 13 is a schematic flowchart of still another deregistration method according to an embodiment of this application;
FIG. 14 is a schematic flowchart of still another deregistration method according to an embodiment of this application;
FIG. 15 is a schematic block diagram of a communication apparatus according to an embodiment of this application; and
FIG. 16 is a schematic block diagram of another communication apparatus according to an embodiment of this application.

### DESCRIPTION OF EMBODIMENTS

The following describes technical solutions of this application with reference to the accompanying drawings.

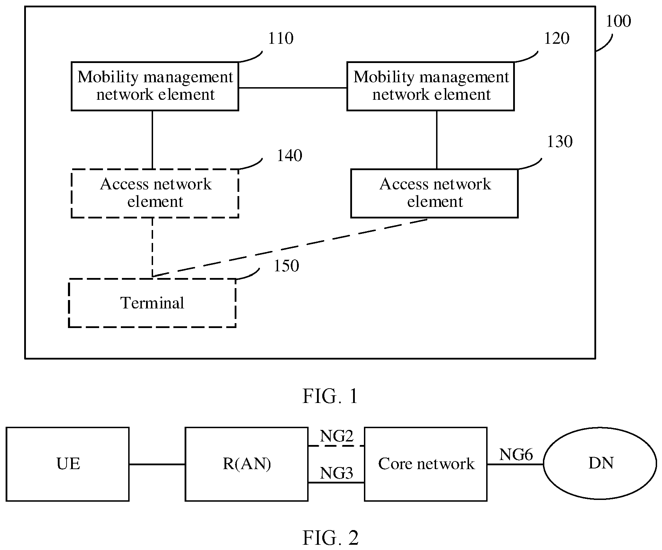

FIG. 1 shows a system architecture 100 used in an embodiment of this application. As shown in FIG. 1, the following separately describes parts in the system architecture.

It should be noted that in the following embodiments of this application, names of messages between network elements, names of parameters in the messages, or the like are merely examples, and there may be other names during specific implementation. This is not specifically limited in embodiments of this application.
1. Mobility management network elements 110 and 120 are mainly configured to perform mobility management, access management, and the like, and may be configured to implement functions, for example, lawful interception and access authorization/authentication, other than session management in functions of a mobility management entity (mobility management entity, MME).
   In a 5G communication system, the mobility management network element may be a mobility management function (access and mobility management function, AMF) network element. In a future communication system, the mobility management network element may still be an AMF network element, or may have another name. This is not limited in this application.
2. (Radio) access network (radio access network, (R)AN) network elements 130 and 140 are configured to provide a network access function for authorized terminal devices in a specific area, and can use transmission tunnels with different quality based on levels of the terminal devices, service requirements, and the like.
   The (R)AN network element can manage radio resources, and provide an access service for the terminal device, to forward a control signal and data of the terminal device between the terminal device and a core network. The (R)AN network element may also be understood as a base station in a conventional network.
3. A terminal device 150 may include various handheld devices, vehicle-mounted devices, wearable devices, and computing devices that have a wireless communication function, or other processing devices connected to a wireless modem, and various forms of terminals, for example, a mobile station (mobile station, MS), a terminal (terminal), user equipment (user equipment, UE), and a soft client. For example, the terminal device 150 is a water meter, an electricity meter, or a sensor.

The system architecture 100 may be configured to perform a deregistration method provided in an embodiment of this application.

Specifically, the mobility management network element 110 is specifically configured to: receive a second message sent by the mobility management network element 120; determine whether the mobility management network element 120 supports onboarding (onboarding) registration; and send a first message to the mobility management network element 120.

Specifically, the mobility management network element 110 determines, based on onboarding capability information of the mobility management network element 120, whether the mobility management network element 120 supports onboarding. Further, the mobility management network element 110 may obtain the onboarding capability information of the mobility management network element 120 by querying local configuration information. Alternatively, the mobility management network element 110 may obtain the onboarding capability information of the mobility management network element 120 based on the second message, that is, the second message carries the onboarding capability information of the mobility management network element 120. Optionally, the second message may be specifically a retrieve UE context request message or a UE context create response message. This is not limited in this application.

Optionally, the mobility management network element 110 may be further configured to select the mobility management network element 120 that supports onboarding.

In some possible implementations, the mobility management network element 110 obtains onboarding indication information from a UE context, and selects, based on the onboarding indication information, the mobility management network element 120 that supports onboarding. Further, the mobility management network element 110 may select, by querying the local configuration information based on the onboarding indication information, the mobility management network element 120 that supports onboarding. Alternatively, the mobility management network element 110 may discover and select, by querying a network repository network element based on the onboarding indication information, the mobility management network element 120 that supports onboarding.

Optionally, the mobility management network element 110 sends a first message to the mobility management network element 120 that supports onboarding. The first message carries first information, and the first information indicates the mobility management network element 120 to start a deregistration timer. The first information may be specifically the onboarding indication information or time information of a first deregistration timer on the mobility management network element 110.

Optionally, if the mobility management network element 110 has not started the first deregistration timer, the first message sent by the mobility management network element 110 to the mobility management network element 120 may carry the onboarding indication information. The onboarding indication information indicates that a terminal device is performing onboarding registration, or indicates that the terminal device is a terminal device registered for onboarding.

Optionally, if the mobility management network element 110 has started the first deregistration timer, the first message sent by the mobility management network element 110 to the mobility management network element 120 may carry the time information of the first deregistration timer on the mobility management network element 110. The time information of the first deregistration timer on the mobility management network element 110 indicates elapsed time or remaining time of the first deregistration timer on the mobility management network element 110.

Further, the first message may be specifically a retrieve UE context response message sent to the mobility management network element 120. Alternatively, the first message is a UE context establishment request message. Alternatively, the first message is an N2 message notification acknowledge message. Alternatively, the first message may be another message. This is not limited in this application.

It should be understood that, when the terminal device moves after being initially registered with an ON-SNPN for onboarding, an original mobility management network element cannot continue serving the terminal device. In this case, a new mobility management network element needs to be selected. That is, the mobility management network element needs to be redirected. Optionally, a mobility management network element redirection process may occur in a mobility registration process of the terminal device, that is, in this case, the terminal device is in an idle state. Alternatively, the mobility management network element redirection process may occur in a handover process, that is, in this case, the terminal device is in a connected state.

It should be noted that, when the terminal device moves, causing redirection of a mobility management network element, the terminal device may move to an area in which onboarding is not supported. In this case, the mobility management network element 120 that supports onboarding cannot be selected. In this case, to ensure call continuity or normal execution of the mobility registration process, a mobility management network element that does not support onboarding is selected. In this case, after the mobility management network element 110 determines, based on the onboarding capability information of the mobility management network element 120, that the mobility management network element 120 does not support the onboarding registration, the first message sent to the mobility management network element 120 may not carry the first information, and an existing mobility registration procedure or handover procedure continues. Alternatively, after determining, based on the onboarding capability information of the mobility management network element 120, that the mobility management network element 120 does not support the onboarding registration, the mobility management network element 110 still sends the first message carrying the first information to the mobility management network element 120. In this case, the first information in the first message no longer indicates the mobility management network element 120 to start the second deregistration timer. Optionally, in the foregoing two cases, when the mobility management network element is redirected next time, a mobility management network element that supports onboarding may be selected, and the first information may be transferred to the mobility management network element that supports onboarding.

Correspondingly, the mobility management network element 120 is configured to: receive the first message sent by the mobility management network element 110; perform a first operation based on the obtained first message and whether the mobility management network element 120 supports onboarding; and send the second message to the mobility management network element 110.

Optionally, the first operation is specifically starting the second deregistration timer based on the onboarding indication information. Alternatively, the first operation is storing the onboarding indication information in the UE context. Alternatively, the first operation is starting the second deregistration timer based on the time information of the deregistration timer on the mobility management network element 110, and continuing to execute the remaining time of the first deregistration timer. Alternatively, the first operation is ignoring the time information of the first deregistration timer on the mobility management network element 110.

Specifically, if the mobility management network element 120 supports onboarding, the second deregistration timer is started based on the onboarding indication information carried in the received first message. Alternatively, if the mobility management network element 120 supports onboarding, the second deregistration timer is started based on the time information that is of the first deregistration timer on the mobility management network element 110 and that is carried in the received first message, and the remaining time of the first deregistration timer continues to elapse. Alternatively, if the mobility management network element 120 does not support onboarding, the onboarding indication information carried in the received first message is stored in the UE context, and during next relocation (relocation) of a mobility management network element, the onboarding indication information is transferred to a new mobility management network element via the UE context. Alternatively, if the mobility management network element 120 does not support onboarding, the time information that is of the deregistration timer on the mobility management network element 110 and that is carried in the received first message is ignored or deleted. Correspondingly, the access network element 130 is configured to receive a third message sent by the terminal 150. The third message may carry the onboarding indication information. Optionally, the radio resource control message may further carry a registration request message. Specifically, the third message may be a radio resource control message or an access network message, or may be another message. This is not limited in embodiments of this application. The access network element 130 is configured to: select the mobility management network element 120, and send an N2 message to the mobility management network element 120. The N2 message may carry the onboarding indication information. Optionally, the N2 message may further carry a registration request.

Optionally, the access network element 130 may be further configured to: receive a handover request message sent by the mobility management network element 120; send a handover request response message to the mobility management network element 120; and send a handover notification message to the mobility management network element 120.

Optionally, the access network element 140 is configured to: send a handover preparation message to the mobility management network element 110, where the handover preparation message indicates the mobility management network element 110 to perform handover; receive a handover command message sent by the mobility management network element 110; and send the handover command message to the terminal 150.

Correspondingly, the terminal 150 is configured to: send the third message to the access network element 130, where the third message may carry the onboarding indication information, and optionally, the third message may further carry the registration request message; and receive a registration response message sent by the mobility management network element 120.

Optionally, the terminal 150 may be further configured to receive the handover command message sent by the access network element 140.

Optionally, the terminal 150 may be further configured to send a handover acknowledge message to the access network element 130.

It should be noted that the terminal 150 may be a terminal in a connected state or a terminal in an idle state, and the mobility management network element 110 may communicate with the mobility management network element 120 through an N14 interface. This is not limited in this embodiment of this application.

FIG. 2 is a diagram of an architecture of a 5G mobile communication system. As shown in the figure, the architecture of the 5G mobile communication system includes a (radio) access network (radio access network, (R)AN), a core network (Core), and a data network (data network, DN). UE, the AN, and the core are main components of the architecture. Logically, the UE, the AN, and the core may be divided into two parts: a user plane and a control plane. The control plane is responsible for mobile network management, and the user plane is responsible for service data transmission. In the figure, an NG2 reference point is located between the AN control plane and the core control plane, an NG3 reference point is located between the AN user plane and the core user plane, and an NG6 reference point is located between the core user plane and the data network.

The UE is an entry for a mobile user to interact with a network, and can provide a basic computing capability, a storage capability, display a service window for the user, and receive an operation input of the user. The UE establishes a signal connection and a data connection to the AN by using a new radio technology, to transmit a control signal and service data to a mobile network.

The AN is similar to a base station in a conventional network, is deployed near the UE, provides a network access function for an authorized user in a specific area, and can use transmission tunnels of different quality to communicate user data based on user levels and service requirements. The AN can manage its own resources, properly use the resources, provide an access service for the UE on demand, and forward the control signal and the user data between the UE and the core network.

The core maintains subscription data of the mobile network, manages network elements of the mobile network, and provides functions such as session management, mobility management, policy management, and security authentication for the UE. When the UE is attached, the core provides network access authentication for the UE; when the UE has a service request, the core allocates a network resource to the UE; when the UE moves, the core updates a network resource for the UE; when the UE is idle, the core provides a fast resume mechanism for the UE; when the UE is detached, the core releases a network resource for the UE; and when the UE has the service data, the core provides a data routing function for the UE, for example, forwards uplink data to the DN, or receives downlink data of the UE from the DN and forwards the downlink data to the AN to send the downlink data to the UE.

The DN is a data network that provides a service for a user. Usually, a client is located in the UE, and a serving end is located in the data network. The data network may be a private network such as a local area network, an external network that is not managed and controlled by an operator, such as the Internet, or a dedicated network jointly deployed by operators, such as a dedicated network deployed to configure an IP multimedia network subsystem (IP multimedia core network subsystem, IMS) service.

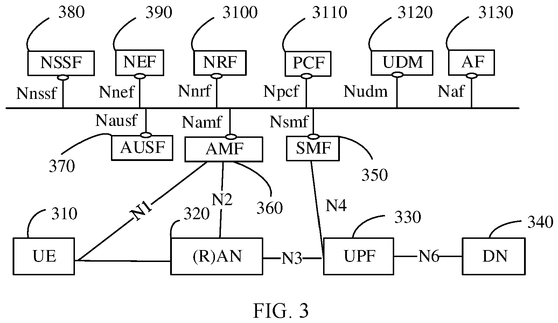

FIG. 3 shows a detailed architecture on the basis of FIG. 2. A core network control plane uses a service-based architecture, control plane network elements interact with each other through service invoking. In this architecture, a control plane network element exposes services to another control plane network element for invoking by the another control plane network element. The following separately describes components in the network architecture shown in FIG. 3.
1. User equipment (user equipment, terminal) 310 may include various handheld devices, vehicle-mounted devices, wearable devices, and computing devices that have a wireless communication function, other processing devices connected to a wireless modem, and terminals, mobile stations (mobile stations, MSs), terminals (terminals), soft clients, and the like in various forms. For example, the user equipment 310 is a water meter, an electricity meter, or a sensor.

For example, the user equipment in embodiments of this application may be an access terminal, a subscriber unit, a subscriber station, a mobile station, a relay station, a remote station, a remote terminal, a mobile device, a user terminal (user terminal), a terminal (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, user equipment in a 5G network, user equipment in a future evolved public land mobile network (public land mobile network, PLMN), user equipment in a future internet of vehicles, or the like. This is not limited in embodiments of this application.

As an example rather than a limitation, in embodiments of this application, the wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of the user. The wearable device is not only a hardware device, but also implements a powerful function through software support, data exchange, and cloud interaction. Generalized wearable intelligent devices include full-featured and large-size devices, such as smart watches or smart glasses, that can implement complete or partial functions without depending on smartphones, and devices, such as various smart bands or smart jewelry for monitoring physical signs, that focus on only one type of application functions and need to work with other devices such as smartphones.

In addition, the user equipment in embodiments of this application may alternatively be user equipment in an internet of things (internet of Things, IoT) system. IoT is an important part of future development of information technologies. A main technical feature of the IoT is connecting a thing to a network by using a communication technology, to implement an intelligent network of human-machine interconnection and machine-to-machine interconnection. In embodiments of this application, the IoT technology can implement massive connections, deep coverage, and power saving for terminals by using, for example, a narrowband (narrowband, NB) technology. In addition, in embodiments of this application, the user equipment may further include a sensor such as an intelligent printer, a train detector, or a gas station. Main functions of the user equipment include collecting data (some user devices), receiving control information and downlink data of an access network device, sending an electromagnetic wave, and transmitting uplink data to the access network device.

2. A (radio) access network (radio access network, (R)AN) device 320 is configured to provide a network access function for authorized user equipment in a specific area, and can use transmission tunnels of different quality based on levels, service requirements, and the like of the user equipment.

The (R)AN can manage radio resources, and provide an access service for the user equipment, to forward a control signal and data of the user equipment between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), or an access point (access point, AP), a wireless relay node, a wireless backhaul node, a transmission point (transmission point, TP), or a transmission reception point (transmission reception point, TRP) in a wireless fidelity (wireless fidelity, Wi-Fi) system, may be a gNB or a transmission point (a TRP or a TP) in a 5G system such as an NR system, may be one or a group of antenna panels (including a plurality of antenna panels) of a base station in the 5G system, or may be a network node included in the gNB or the transmission point, for example, a baseband unit (BBU) or a distributed unit (distributed unit, DU).

In some network deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU performs some physical layer processing functions, radio frequency processing, and a function related to an active antenna. Information at the RRC layer is eventually converted into information at the PHY layer, or is converted from information at the PHY layer. Therefore, in this architecture, higher layer signaling, for example, RRC layer signaling, may also be considered as being sent by the DU, or sent by the DU and the AAU. It may be understood that the access network device may be a device including one or more of a CU node, a DU node, and an AAU node. In addition, the CU may be classified into an access network device in an access network (radio access network, RAN), or the CU may be classified into an access network device in a core network (core network, CN). This is not limited in this application.

3. A user plane network element 330 is configured to perform packet routing and forwarding, quality of service (quality of service, QoS) handling of user plane data, and the like.

In the 5G communication system, the user plane network element may be a user plane function (user plane function, UPF) network element. In the future communication system, the user plane network element may still be the UPF network element, or may have another name. This is not limited in this application.

4. A data network element 340 is configured to provide a network for data transmission.

In the 5G communication system, the data network element may be a data network (data network, DN) network element. In the future communication system, the data network element may still be a DN network element, or may have another name. This is not limited in this application.

5. A session management network element 350 is mainly configured to perform session management, terminal internet protocol (internet protocol, IP) address allocation and management, selection and control of a user plane function, termination of interfaces towards policy control and charging functions, downlink data notification, and the like.

In the 5G communication system, the session management function network element may be a session management function (session management function, SMF) network element. In a future communication system, the session management function network element may still be the SMF network element, or may have another name. This is not limited in this application.

6. An access management network element 360 is mainly configured to perform mobility management, access management, and the like, and may be configured to implement functions, for example, lawful interception and access authorization/authentication, other than session management in functions of a mobility management entity (mobility management entity, MME).

In the 5G communication system, the access management network element may be an access and mobility management function (access and mobility management function, AMF) network element. In the future communication system, the access management network element may still be the AMF network element, or may have another name. This is not limited in this application.

7. An authentication server 370 is configured for service authentication, key generation for bidirectional authentication for terminals, and supports a unified authentication framework.

In the 5G communication system, the authentication server may be an authentication server function (authentication server function, AUSF) network element. In the future communication system, the authentication server function network element may still be the AUSF network element, or may have another name. This is not limited in this application.

8. A network slice selection network element 380 is configured to search for a policy control function (policy control function, PCF) network element associated with a session.

In the 5G communication system, the network slice selection network element may be a network slice selection function (network slice selection function, NSSF) network element. In the future communication system, the network slice selection network element may still be the NSSF network element, or may have another name. This is not limited in this application.

9. A network exposure network element 390 exposes a network function to a third party through a northbound API interface.

In the 5G communication system, the network exposure network element may be a network exposure function (network exposure function, NEF) network element. In the future communication system, the network exposure network element may still be the NEF network element, or may have another name. This is not limited in this application.

10. A network repository network element 3100 is configured to maintain real-time information of all network function services in the network.

In the 5G communication system, the network repository network element may be a network repository function (network repository function, NRF) network element. In the future communication system, the network repository network element may still be the NRF network element, or may have another name. This is not limited in this application.

It may be understood that the foregoing network elements or functions may be network elements in a hardware device, may be software functions running on dedicated hardware, or may be virtualization functions instantiated on a platform (for example, a cloud platform).

Certainly, the network architecture in FIG. 1 may further include another network element, for example, a network element or device such as a unified data repository (unified data repository, UDR) or a network repository function (network repository function, NRF). This is not specifically limited.

11. A policy control network element 3110 is configured to support a unified policy framework to govern network behavior, provide policy rule information to a control plane function network element (for example, the AMF or the SMF), and the like.

In the 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

12. A data management network element 3120 is configured to perform terminal identification handling, access authorization, registration, mobility management, and the like.

In the 5G communication system, the data management network element may be a unified data management (unified data management, UDM) network element. In the future communication system, the unified data management may still be the UDM network element, or may have another name. This is not limited in this application.

13. An application network element 3130 is configured to perform application influence on traffic routing, access a network exposure function network element, interact with a policy framework for policy control, and the like.

In the 5G communication system, the application network element may be an application function (application function, AF) network element. In the future communication system, the application network element may still be the AF network element, or may have another name. This is not limited in this application.

In the architecture shown in FIG. 3, an N1 interface is a reference point between the UE and the AMF. An N2 interface is a reference point between the (R)AN and AMF, and is configured to send a NAS message, and the like. An N3 interface is a reference point between the (R)AN and the UPF, and is configured to perform user plane data and the like. An N4 interface is a reference point between the SMF and the UPF, and is configured to perform transmission of information such as tunnel identification information of an N3 connection, data buffering indication information, and a downlink data notification message. An N6 interface is a reference point between the UPF and the DN, and is configured to perform transmission of the user plane data and the like.

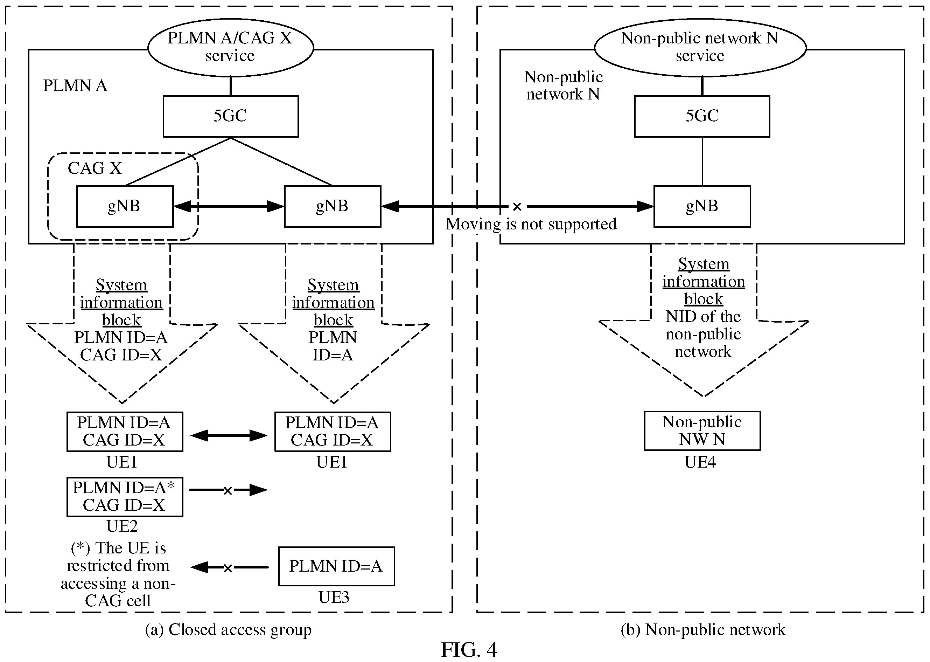

FIG. 4 is a schematic diagram of a non-public network used in an embodiment of this application. The non-public network (Non-public network, NPN) shown in FIG. 4 is a non-public 5G network, and may be classified into a public network integrated NPN (public network integrated NPN, PNI-NPN) and a standalone NPN (standalone NPN, SNPN) based on whether the non-public network depends on a network function of a PLMN. The following describes the PNI-NPN and the SNPN.

(a) in FIG. 4 is the PNI-NPN, and may be implemented by using a network slice in the PLMN. To prevent unauthorized UE from accessing and selecting the PNI-NPN, a closed access group (closed access group, CAG) function may be additionally used. A CAG identifies a group of users, and the users are allowed to access a cell (CAG cell) associated with the CAG. To prevent a terminal device that is not allowed to access the CAG cell from automatically selecting and accessing the CAG cell, the CAG cell broadcasts one or more CAG IDs, and an available CAG list and an indication (indicating whether the terminal device is allowed to access a 5GS through only the CAG cell) are configured on the terminal device. Subscription data of the UE on the UDM includes an available CAG list and an indication. That is, access of the terminal device is restricted by broadcasting the CAG ID and configuring the available CAG ID of the terminal device.

(b) in FIG. 4 is the SNPN, and does not depend on the PLMN network. The SNPN is identified by using a PLMN ID and a network identifier (Network identifier, NID). The PLMN ID may be an inherent value reserved by a third-party operator, or may be a value specified by a PLMN operator that deploys the SNPN. In the SNPN, a cell broadcasts the PLMN ID and the NID, and the terminal device selects an NPN to access based on the broadcast information and configured network selection information. If the terminal device finds that the configured network selection information (PLMN ID+NID1) is different from the PLMN ID or the PLMN ID+NID2 broadcast by the network, the terminal device does not select to access the network. That is, the PLMN ID and the NID are broadcast to enable the terminal device to correctly select a cell and a network.

To facilitate understanding of embodiments of this application, terms in this application are first briefly described.
1. Onboarding (onboarding): The terminal device accesses a network to establish a temporary restricted connection, to obtain new subscription data or updated subscription data from a provisioning server (Provisioning Server, PVS) by using the temporary restricted connection, to configure the terminal device.
2. SNPN onboarding (SNPN onboarding) registration: For the purpose of onboarding, the terminal device selects an SNPN, and registers with an onboarding SNPN network (onboarding SNPN, ON-SNPN) by using an SNPN onboarding registration process and based on a default UE credential. The terminal device establishes a secure connection to the ON-SNPN, to access the ON-SNPN. Then, the terminal device may establish a restricted PDU session on the ON-SNPN, and configures, to the terminal device by using the restricted PDU session, a credential and other information that are used for initial authentication, so that the terminal device accesses a subscription owner SNPN network (subscription owner SNPN, SO-SNPN).
   It should be understood that, the SNPN is referred to as an onboarding standalone non-public network (Onboarding standalone non-public network, ON-SNPN), where the SNPN supports the terminal device in establishing the secure connection to the SNPN by using the SNPN onboarding registration process, so that the terminal device is allowed to access the ON-SNPN.
3. Initial registration: Initial registration is a process that the terminal device registers with the network for the first time. In embodiments of this application, the initial registration refers to a process in which the terminal device performs onboarding registration in an SNPN area that supports onboarding for the first time, that is, SNPN onboarding registration.
4. Mobility registration: In embodiments of this application, after the terminal device is initially registered with the ON-SNPN, the terminal device moves in the ON-SNPN, and location information of the terminal device needs to be updated in the ON-SNPN, to perform subsequent mobility management. Such a process is referred to as mobility registration. In this process, if an original mobility management network element cannot continue serving the terminal device, mobility management network element redirection is triggered.
   It should be understood that the foregoing mobility registration occurs when the terminal device is in an idle state.
5. Handover procedure: When the terminal device moves, a procedure is initiated to provide a continuous uninterrupted communication service for the terminal device and effectively prevent a call drop caused by deterioration of signal quality in a cell, or indicate the terminal device to communicate with a cell whose channel quality is better than that in a current serving cell.
   It should be noted that the handover procedure occurs when the terminal device is in a connected state.
6. Deregistration timer: When the terminal device that registers with the ON-SNPN through the SNPN onboarding registration completes remote user-plane setting of a SO-SNPN credential, deregistration should be initiated from the ON-SNPN. The deregistration timer is a specific timer configured to trigger the terminal device to deregister from the ON-SNPN. Based on an ON-SNPN policy, when the terminal device performs onboarding registration on the ON-SNPN, the mobility management network element may start the deregistration timer, and a deregistration procedure is triggered when the deregistration timer expires, to deregister the terminal device that completes the SNPN onboarding registration from the ON-SNPN.

Optionally, an initial value of the deregistration timer may be set in a local configuration of the mobility management network element. The initial value is total execution duration of the deregistration timer. The initial value also represents maximum duration that is allowed by the ON-SNPN to camp on the ON-SNPN by each terminal device registered for onboarding. For each mobility management network element supporting onboarding, initial values in local configuration information of the mobility management network elements are the same.

It should be understood that in the 5G communication system, the mobility management network element may be an access and mobility management function (access and mobility management function, AMF) network element. In the future communication system, the mobility management network element may still be the AMF network element, or may have another name. This is not limited in embodiments of this application.

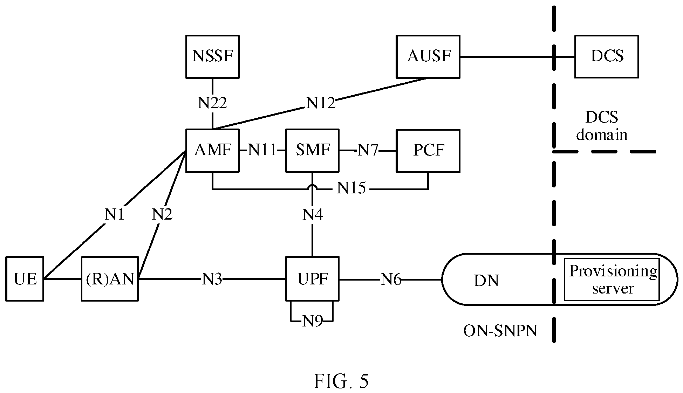

FIG. 5 is a schematic diagram of an architecture of an onboarding system based on the NPN shown in FIG. 4, and is an extension of the architecture of the 5G mobile communication system. A core network control plane uses a point-to-point architecture. To be specific, a specific message is sent between control plane network elements through a communication interface, and the message can be used only by the control plane network elements at both ends of the interface during communication. Specifically, an AMF communicates with an SMF through an N11 interface, the AMF communicates with an AUSF through an N12 interface, the AMF communicates with an NSSF through an N22 interface, and the AMF communicates with a PCF through an N15 interface. The AUSF is connected to a default credential server (default credential server, DCS) through an interface. The DCS is configured to perform authentication and authorization on a terminal device based on a default UE credential in an onboarding process. In this architecture, the terminal device performs SNPN onboarding registration in an ON-SNPN by using a credential of the DSC. After successful registration, the terminal device obtains initial access to the ON-SNPN, and the AMF starts a deregistration timer. After the timer expires, the terminal device is triggered to be deregistered from the ON-SNPN, that is, to be deregistered, to prevent the terminal device from camping on the ON-SNPN indefinitely.

Optionally, after completing the SNPN onboarding registration, the terminal device may initiate a PDU session establishment request, to obtain a PDU session connection service of the network. The terminal device may establish a connection to the PVS by using a PDU session, so that the terminal device obtains new subscription data of the subscription owner SNPN (Subscription owner SNPN, SO-SNPN) from the PVS.

It should be understood that the ON-SNPN may support onboarding in some areas. In cells in these areas, the RAN broadcasts an onboarding enabled indication to indicate whether the cell supports onboarding. When the terminal device is located in an ON-SNPN cell that supports onboarding, the terminal device may select, based on the onboarding enabled indication in the broadcast message, to perform onboarding registration in the ON-SNPN. After the onboarding registration succeeds, the terminal device may subsequently move to another service area of the ON-SNPN, for example, move to a cell that does not support onboarding. This does not affect obtaining of new subscription data from the PVS by the terminal device by using the PDU session.

It should be noted that names of interfaces between the network elements in FIG. 2, FIG. 3, and FIG. 5 are merely examples. During specific implementation, the names of the interfaces may be other names. This is not specifically limited in embodiments of this application. Names of the network elements (for example, the SMF, the AF, and the UPF) included in FIG. 1 to FIG. 5 are merely examples, and constitute no limitation on functions of the network elements. In the 5G network and the another future network, the foregoing network elements may also have other names. This is not specifically limited in embodiments of this application. For example, in a 6G network, some or all of the foregoing network elements may continue to use terms in 5G, or may use other names. Unified descriptions are provided herein, and are not described below. In addition, it should be understood that a name of a message (or signaling) transmitted between the foregoing network elements is merely an example, and does not constitute any limitation on a function of the message.

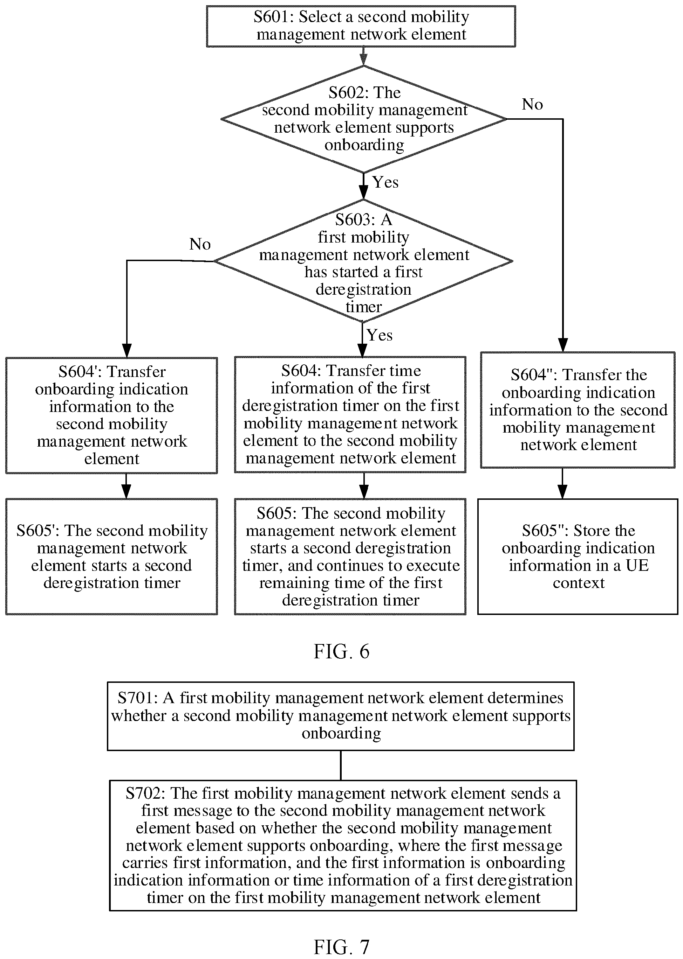

FIG. 6 is a schematic flowchart of a deregistration method according to an embodiment of this application. The method may be applied to the system architectures in FIG. 1 to FIG. 3, or may be applied to the system architecture shown in FIG. 5. This embodiment of this application is not limited thereto. FIG. 6 shows steps or operations of the deregistration method, but these steps or operations are merely examples. Another operation or variations of the operations in FIG. 6 may also be performed in this embodiment of this application. In addition, the steps in FIG. 6 may be performed in a sequence different from that shown in FIG. 6, and possibly, not all the operations in FIG. 6 need to be performed.

S601: Select a second mobility management network element.

It should be understood that, in this case, a terminal device moves. As a result, an initial mobility management network element: a first mobility management network element, cannot serve the terminal device, and a new mobility management network element: the second mobility management network element, needs to be selected to serve the terminal device.

Specifically, the second mobility management network element may be selected by an access network element. The access network element selects the second mobility management network element based on onboarding indication information carried in RRC signaling sent by the terminal. The onboarding indication information indicates that the terminal device is performing onboarding registration, or indicates that the terminal device is a terminal device registered for onboarding.

Optionally, the step of selecting the second mobility management network element is performed by the first mobility management network element. The first mobility management network element obtains the onboarding indication information, and learns that the terminal device is performing the onboarding registration or has registered for onboarding. In this case, the first mobility management network element queries local configuration information, and selects the second mobility management network element that supports onboarding. Alternatively, the first mobility management network element discovers and selects, by querying a network repository network element, the second mobility management network element that supports onboarding. If the first mobility management network element selects the second mobility management network element based on the local configuration information, before this step, onboarding capability information of each mobility management network element needs to be preset in a local configuration. The onboarding capability information indicates whether the mobility management network element supports onboarding. If the first mobility management network element selects, based on NF profile information of the network repository network element, the second mobility management network element that supports onboarding, before this step, the onboarding capability information of each mobility management network element needs to be configured in an NF profile of the network repository network element.

Optionally, the first mobility management network element may obtain the onboarding indication information by using a UE context. Specifically, before obtaining the onboarding indication information from the UE context, the first mobility management network element stores the onboarding indication information in the UE context based on the onboarding indication information obtained from an N2 or N14 message, or based on a registration type of "SNPN onboarding (SNPN onboarding)".

It should be understood that, when the first mobility management network element receives the N2 message, or obtains the onboarding indication information from information about the registration type of "SNPN onboarding (SNPN onboarding)", no mobility management network element redirection occurs at that time. In this case, the onboarding indication information needs to be stored in the UE context first. When the mobility management network element is redirected, the onboarding indication information is obtained from the UE context. Alternatively, when AMF redirection has occurred, the N14 message is received, and the onboarding indication information is stored in the UE context first for subsequent use of the onboarding indication information in the N14 message.

S602: Determine whether the second mobility management network element supports onboarding.

Specifically, the first mobility management network element determines whether the second mobility management network element supports onboarding.

It should be noted that, if S601 is performed by the access network element, the first mobile network element cannot learn whether the second mobility management network element supports onboarding. In this case, in S602, whether the second mobility management network element supports onboarding needs to be further determined. If S601 is performed by the first mobility management network element, when selecting the second mobility management network element, the first mobility management network element may learn whether the second mobility management network element supports onboarding.

For example, the first mobility management network element receives a second message sent by the second mobility management network element. The second message carries onboarding capability information of the second mobility management network element. The first mobility management network element determines, based on the onboarding capability information of the second mobility management network element, whether the second mobility management network element supports onboarding.

Optionally, the second message may be specifically a retrieve UE context request message or a UE context establishment response message. This is not limited in this embodiment of this application.

For another example, the first mobility management network element queries the local configuration information, and determines, based on the onboarding capability information of the second mobility management network element in the local configuration information, whether the second mobility management network element supports onboarding.

Optionally, S602 may be specifically divided into S602a and S602b.

S602a: If the second mobility management network element supports onboarding, step S603 is performed.

S602b: If the second mobility management network element does not support onboarding, step S604" is performed.

S603: Determine whether the first mobility management network element has started a first deregistration timer.

Specifically, the first mobility management network element determines whether the first mobility management network element has started the first deregistration timer, and if the first deregistration timer has been started, S604 is performed, or if the first deregistration timer has not been started, S604' is performed.

S604: The first mobility management network element transfers time information of the first deregistration timer on the first mobility management network element to the second mobility management network element.

Specifically, the time information of the first deregistration timer on the first mobility management network element may be elapsed time of the first deregistration timer on the first mobility management network element, or may be remaining time of the first deregistration timer on the first mobility management network element.

S604': The first mobility management network element transfers the onboarding indication information to the second mobility management network element.

Specifically, the onboarding indication information indicates that the terminal device is performing the onboarding registration, or indicates that the terminal device is the terminal device registered for onboarding.

S604": The first mobility management network element transfers the onboarding indication information to the second mobility management network element.

Specifically, if the first mobility management network element determines that the second mobility management network element does not support onboarding, regardless of whether the first mobility management network element has started the first deregistration timer, the first mobility management network element transfers the onboarding indication information to the second mobility management network element in S604", so that the second mobility management network element stores the onboarding indication information in the UE context, and transfers the information to a mobility management network element that supports onboarding.

S605: The second mobility management network element starts a second deregistration timer, and continues to execute the remaining time of the deregistration timer.

Specifically, the second mobility management network element starts the second deregistration timer based on the time information of the first deregistration timer on the first mobility management network element, and continues to execute the remaining time of the first deregistration timer. Optionally, the time information of the first deregistration timer on the first mobility management network element may be the elapsed time of the first deregistration timer on the first mobility management network element, or the remaining time of the first deregistration timer on the first mobility management network element. If the time information of the first deregistration timer on the first mobility management network element is the elapsed time of the first deregistration timer on the first mobility management network element, the second mobility management network element calculates remaining time based on an initial value of a deregistration timer in the local configuration information and elapsed time of the deregistration timer. Specifically, an initial value of a deregistration timer is set in a local configuration of each mobility management network element. The initial value is total execution duration of the deregistration timer. The initial value also represents maximum duration that is allowed by an ON-SNPN to camp on the ON-SNPN by each terminal device registered for onboarding. For each mobility management network element supporting onboarding, initial values in local configuration information of the mobility management network elements are the same.

S605': The second mobility management network element starts the second deregistration timer.

Specifically, the second mobility management network element starts the second deregistration timer based on the received onboarding indication information and the local configuration information. The local configuration information includes the initial value of the deregistration timer. The initial value represents the maximum duration that is allowed by the ON-SNPN to camp on the ON-SNPN by each terminal device registered for onboarding. For each mobility management network element supporting onboarding, the initial values in the local configuration information of the mobility management network elements are the same.

S605": The second mobility management network element stores the onboarding indication information in the UE context.

Specifically, because the second mobility management network element does not support onboarding, the second deregistration timer cannot be started based on the onboarding indication information after reception of the onboarding indication information. In this case, when the second mobility management network element stores the onboarding indication information in the UE context, namely, the N14 message, and obtains the onboarding indication information, mobility management network element redirection occurs, and the onboarding indication information needs to be stored in the UE context first. After mobility management network element relocation (relocation) is initiated, the second mobility management network element sends, via the UE context, the onboarding indication information to a new mobility management network element that supports onboarding, so that the new mobility management network element starts a deregistration timer.

It should be noted that, in some cases, if the second mobility management network element that supports onboarding cannot be selected in S601, it is determined that the second mobility management network element does not support onboarding in S602. In this case, regardless of whether the first mobility management network element has started the first deregistration timer, the first mobility management network element does not transfer the onboarding indication information or the time information of the first deregistration timer on the first mobility management network element to the second mobility management network element, and continues an existing registration procedure. Alternatively, if the second mobility management network element that supports onboarding cannot be selected in S601, the first mobility management network element determines that the second mobility management network element does not support onboarding in S602, and the first mobility management network element has started the first deregistration timer in S603. In this case, the first mobility management network element may also transfer the time information of the first deregistration timer on the first mobility management network element to the second mobility management network element. When receiving the time information of the first deregistration timer on the first mobility management network element, the second mobility management network element ignores or deletes the information, and continues the registration process. Optionally, when the mobility management network element is redirected or relocated next time, the onboarding indication information is transferred to a selected mobility management network element that supports onboarding.

According to the deregistration method in this embodiment of this application, the second mobility management network element supporting onboarding is selected, and the onboarding indication information or the time information that is of the first deregistration timer on the first mobility management network element and that is of the first mobility management network element is transferred to the second mobility management network element, so that the second mobility management network element can start the deregistration timer after the mobility management network element is redirected. After the deregistration timer expires, a deregistration procedure is triggered to deregister registration information of the terminal device on the ON-SNPN, and PDU session release is triggered, to prevent the terminal device from camping on the ON-SNPN indefinitely.

FIG. 7 is a schematic flowchart of a deregistration method according to an embodiment of this application. The method may be applied to the system architectures in FIG. 1 to FIG. 3, or may be applied to the system architecture shown in FIG. 5. This embodiment of this application is not limited thereto. The method shown in FIG. 7 may include the following steps.

S701: A first mobility management network element determines whether a second mobility management network element supports onboarding.

For example, the first mobility management network element receives a second message sent by the second mobility management network element. The second message carries onboarding capability information of the second mobility management network element. The first mobility management network element determines, based on the onboarding capability information of the second mobility management network element, whether the second mobility management network element supports onboarding.

Optionally, the second message may be specifically a retrieve UE context request message or a UE context establishment response message. This is not limited in this embodiment of this application.

For another example, the first mobility management network element queries local configuration information, and determines, based on the onboarding capability information of the second mobility management network element in the local configuration information, whether the second mobility management network element supports onboarding.

For another example, the first mobility management network element obtains onboarding indication information, and queries the local configuration information based on the onboarding indication information to select the second mobility management network element that supports onboarding.

For another example, the first mobility management network element obtains the onboarding indication information, and discovers and selects, by querying a network repository network element based on the onboarding indication information, the second mobility management network element that supports onboarding.

It should be noted that, if the local configuration information is used to determine whether the second mobility management network element supports onboarding, or select the second mobility management network element that supports onboarding, onboarding capability information of the second mobility management network element needs to be pre-configured in the local configuration information. If the second mobility management network element supporting onboarding is discovered and selected by querying NRF NF profile information, the onboarding capability information of the second mobility management network element needs to be pre-configured in the network repository network element.

S702: The first mobility management network element sends a first message to the second mobility management network element based on whether the second mobility management network element supports onboarding, where the first message carries first information, and the first information is onboarding indication information or time information of a first deregistration timer on the first mobility management network element.

Specifically, the onboarding indication information indicates that a terminal device is performing onboarding registration, or indicates that the terminal device is a terminal device registered for onboarding. The time information of the first deregistration timer on the first mobility management network element indicates elapsed time or remaining time of the first deregistration timer on the first mobility management network element.

Optionally, if the first mobility management network element determines that the second mobility management network element supports onboarding, the first mobility management network element determines, based on whether the first mobility management network element has started the first deregistration timer, a type of the first information carried in the first message sent to the second mobility management network element. Specifically, if the first mobility management network element has not started the first deregistration timer, the first message sent to the second mobility management network element includes the onboarding indication information. Alternatively, if the first mobility management network element has started the first deregistration timer, the first message sent to the second mobility management network element carries the time information of the first deregistration timer on the first mobility management network element.

It should be understood that the first message may be specifically a retrieve UE context response message, a UE context establishment request message, or an N2 message notification acknowledge message. This is not limited in this embodiment of this application.

Optionally, if the first mobility management network element determines that the second mobility management network element does not support onboarding in S701, in S702, the first mobility management network element still includes the onboarding indication information or the time information of the first deregistration timer on the first mobility management network element in the first message sent to the second mobility management network element. The second mobility management network element stores the received onboarding indication information in the UE context, and transfers the onboarding indication information to a mobility management network element supporting onboarding when the mobility management network element is redirected or reconfigured next time. Alternatively, the second mobility management network element ignores or deletes the message, and sends the time information of the deregistration timer to the mobility management network element supporting onboarding in another manner when the mobility management network element is redirected or reconfigured next time.

According to the deregistration method in this embodiment of this application, the time information of the first deregistration timer on the first mobility management network element or the onboarding indication information is sent to the second mobility management network element that supports onboarding, to ensure that a new mobility management network element can still start a deregistration timer after mobility management network element redirection. After the deregistration timer expires, a deregistration procedure is triggered to deregister registration information of the terminal device on an ON-SNPN, and PDU session release is triggered, to prevent the terminal device from camping on the ON-SNPN indefinitely.

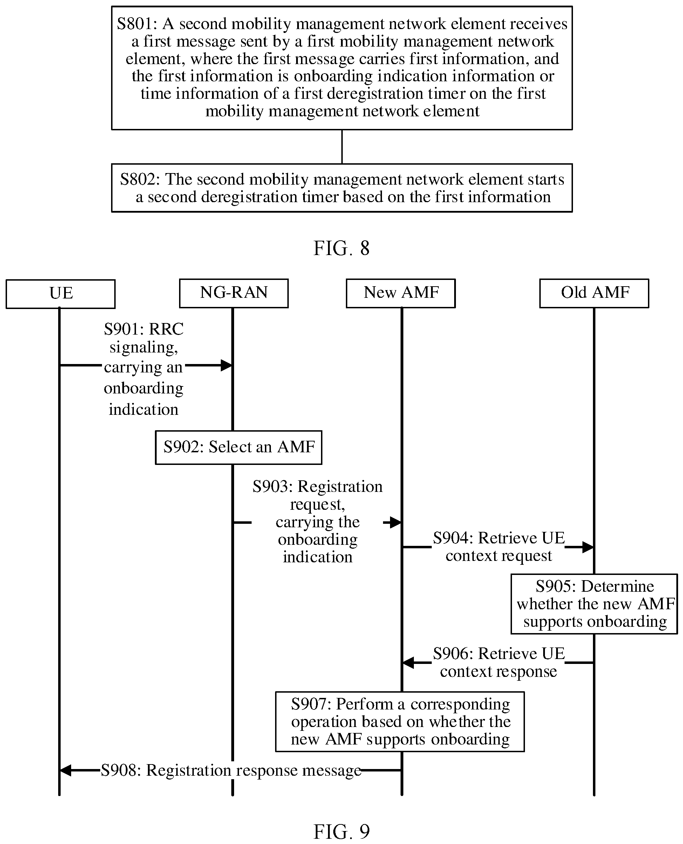

FIG. 8 is a schematic flowchart of a deregistration method according to an embodiment of this application. The method may be applied to the system architectures in FIG. 1 to FIG. 3, or may be applied to the system architecture shown in FIG. 5. This embodiment of this application is not limited thereto. The method shown in FIG. 8 may include the following steps.

S801: A second mobility management network element receives a first message sent by a first mobility management network element, where the first message carries first information.

Specifically, the first information may be time information of a first deregistration timer on the first mobility management network element. The time information of the first deregistration timer on the first mobility management network element indicates elapsed time or remaining time of the first deregistration timer on the first mobility management network element. Alternatively, the first information may be onboarding indication information, and the foregoing onboarding indication information indicates that a terminal device is performing onboarding registration, or indicates that the terminal device is a terminal device registered for onboarding.

Optionally, the time information of the first deregistration timer on the first mobility management network element may be specifically the elapsed time or remaining time of the first deregistration timer on the first mobility management network element.

S802: The second mobility management network element starts a second deregistration timer based on the first information.

Specifically, the second mobility management network element starts the second deregistration timer based on the first information in combination with onboarding capability information of the second mobility management network element.

It should be understood that starting the second deregistration timer may be understood as that the second mobility management network element starts the second deregistration timer based on the onboarding indication information, or may be understood that the second mobility management network element starts the second deregistration timer based on the time information of the first deregistration timer on the first mobility management network element and executes the remaining time of the first deregistration timer.

For example, if the second mobility management network element supports onboarding, and the first information carried in the received first message is the onboarding indication information, the second mobility management network element starts the deregistration timer based on the onboarding indication information. For another example, if the second mobility management network element supports onboarding, and the first information carried in the received first message is the time information of the first deregistration timer on the first mobility management network element, the second mobility management network element starts the second deregistration timer based on the time information of the first deregistration timer on the first mobility management network element, and executes the remaining time of the first deregistration timer. When the time information of the first deregistration timer on the first mobility management network element indicates the elapsed time of the first deregistration timer on the first mobility management network element, the second mobility management network element calculates the remaining time based on an initial value of the deregistration timer in local configuration information and the elapsed time of the first deregistration timer. Specifically, an initial value of a deregistration timer is set in a local configuration of each mobility management network element. The initial value is total execution duration of the deregistration timer. The initial value also represents maximum duration that is allowed by an ON-SNPN to camp on the ON-SNPN by each terminal device registered for onboarding. For each mobility management network element supporting onboarding, initial values in local configuration information of the mobility management network elements are the same.

It should be noted that, in some cases, if the second mobility management network element does not support onboarding, but the first information carried in the received first message is the onboarding indication information, the second mobility management network element stores the received onboarding indication information in a UE context, and sends a registration response message to the terminal device, where the registration response message indicates successful registration. In addition, when the mobility management network element is relocated (relocation) next time, the second mobility management network element transfers the onboarding indication information is to a new mobility management network element via the UE context. Alternatively, if the second mobility management network element does not support onboarding, and the first information carried in the received first message is the time information of the first deregistration timer on the first mobility management network element, the second mobility management network element ignores or deletes the received time information of the first deregistration timer on the first mobility management network element, and transfers the first information to the mobility management network element supporting onboarding in another manner when the mobility management network element is redirected or reconfigured next time.

It should be noted that the deregistration methods shown in FIG. 6 to FIG. 8 may be used in a handover procedure. In this case, the terminal device is in a connected state. Alternatively, the methods may be used in a mobility registration process. In this case, the terminal device is in an idle state. This is not specifically limited in this embodiment of this application. In a possible implementation, in FIG. 6 to FIG. 8, the first mobility management network element may be an old AMF network element or an S-AMF network element, the second mobility management network element may be a new AMF network element or a T-AMF network element, and the access network element may be a RAN. This is not limited in embodiments of this application. In a 5G network and another future network, the foregoing network elements may also have other names. This is not specifically limited in embodiments of this application. For example, in a 6G network, some or all of the foregoing network elements may continue to use terms in 5G, or may use other names. This is not limited in embodiments of this application.

The foregoing describes an overall procedure of the deregistration method provided in embodiments of this application with reference to FIG. 6 to FIG. 8. The following describes in detail procedures of the deregistration methods shown in FIG. 6 to FIG. 8 in specific application scenarios with reference to FIG. 9 to FIG. 11C.

FIG. 9 is a schematic flowchart of another deregistration method according to an embodiment of this application. The method may be applied to the system architectures in FIG. 1 to FIG. 3, or may be applied to the system architecture shown in FIG. 5. This embodiment of this application is not limited thereto.

S901: A terminal device UE sends RRC signaling to a RAN, where the RRC signaling carries onboarding indication information. The onboarding indication information indicates that the terminal device is performing onboarding registration, or indicates that the terminal device is a terminal device registered for onboarding. Optionally, the RRC signaling may further carry a registration request message.

Specifically, the registration request message may include registration type (Mobility Registration) information, indicating a type of ongoing registration. Optionally, the registration request message may further include a 5G globally unique temporary UE identity (5G Globally Unique Temporary UE Identity, 5G-GUTI), a subscription concealed identifier (Subscription Concealed Identifier, SUCI), o a permanent equipment identifier (Permanent Equipment Identifier, PEI).

S902: The RAN selects a new AMF based on an onboarding indication in the RRC signaling.

S903: The RAN sends an N2 message to the new AMF, where the N2 message carries the onboarding indication information and the registration request message in S901.

S904: The new AMF sends a retrieve UE context request message to an old AMF, to request to obtain a UE context. The UE retrieve context request message carries the registration request message in S903.

Specifically, before the new AMF sends the retrieve UE context request message to the old AMF, the new AMF determines the old AMF based on the 5G-GUTI in the registration request information. Optionally, if the new AMF receives a NID in the registration request information, the old AMF is determined based on the 5G-GUTI and the NID.

Optionally, the retrieve UE context request message may carry onboarding capability information of the new AMF. The onboarding capability information indicates whether the new AMF supports onboarding.

S905: The old AMF determines whether the new AMF supports onboarding.

Specifically, if the retrieve UE context request message sent by the new AMF to the old AMF in S904 carries the onboarding capability information of the new AMF, the old AMF determines, based on the onboarding capability information, whether the new AMF supports onboarding.

Optionally, the old AMF may alternatively determine, by querying local configuration information, whether the new AMF supports onboarding. In this case, the onboarding capability information of the new AMF needs to be pre-configured in the local configuration information of the old AMF.

For example, if the old AMF determines that the new AMF supports onboarding, S906 is performed.

For another example, if the old AMF determines that the new AMF does not support onboarding, an existing registration process is performed. The existing registration process means that information related to a deregistration timer is not carried in a message during transmission of the message.

For still another example, if the old AMF determines that the new AMF does not support onboarding, S906 is still performed.

S906: The old AMF sends a retrieve UE context response message to the new AMF. The retrieve UE context response message carries time information of a first deregistration timer on a first mobility management network element or the onboarding indication information.

Specifically, the old AMF determines, based on whether the old AMF has started the first deregistration timer, that the retrieve UE context response message sent to the new AMF specifically carries the time information of the first deregistration timer on the old AMF or the onboarding indication information. Optionally, the time information of the first deregistration timer on the old AMF may include elapsed time of the first deregistration timer on the old AMF. Alternatively, the time information of the first deregistration timer on the old AMF may include remaining time of the first deregistration timer on the old AMF. Optionally, an initial value of a deregistration timer may be set in a local configuration of each AMF. The initial value is total execution duration of the deregistration timer. The initial value also represents maximum duration that is allowed by an ON-SNPN to camp on the ON-SNPN by each terminal device registered for onboarding. For each mobility management network element supporting onboarding, initial values in local configuration information of the mobility management network elements are the same. The new AMF may calculate the remaining time based on the initial value and the elapsed time of the first deregistration timer in the time information of the first deregistration timer on the old AMF.

Specifically, S906 may be S906a or S906b.

S906a: If the old AMF has started the first deregistration timer, the retrieve UE context response message sent to the new AMF carries the time information of the first deregistration timer on the old AMF.

S906b: If the old AMF has not started the first deregistration timer, the retrieve UE context response message sent to the new AMF carries the onboarding indication information.

S907: The new AMF performs a subsequent step based on whether the new AMF supports onboarding and the retrieve UE context response message in S906.

Specifically, S907 may be S907a, S907b, S907c, or S907d.

S907a: If the new AMF supports onboarding, and S906 is S906a, the new AMF starts a second deregistration timer, and continues to execute the remaining time of the first deregistration timer.

S907b: If the new AMF supports onboarding, and S906 is S906b, the new AMF starts the second deregistration timer. Optionally, the new AMF starts the second deregistration timer based on the time information of the deregistration timer on the old AMF and the initial value of the deregistration timer in the local configuration, and continues to execute the remaining time of the first deregistration timer.

S907c: If the new AMF does not support onboarding, and S906 is S906a, the new AMF ignores the time information of the first deregistration timer on the old AMF.

S907d: If the new AMF does not support onboarding, and S906 is S906b, the new AMF stores the onboarding indication information in the UE context.

Optionally, when an AMF is redirected or relocated, the new AMF transfers, via the UE context, the onboarding indication information stored in the UE context to a new AMF that supports onboarding, or transfers, in another manner, first information to the new AMF that supports onboarding.

S908: The new AMF sends a registration response message to the terminal device UE.

Specifically, the registration response message may be a "registration accept (Registration Accept)" response message.

Optionally, if the deregistration timer subsequently expires, the AMF triggers a deregistration procedure, to deregister the terminal device from an SNPN, and triggers release of a PDU session of the terminal device.

According to the deregistration method in this embodiment of this application, in an AMF redirection resulting from mobility registration, the old AMF transfers the onboarding indication information or the time information of the first deregistration timer on the old AMF to the new AMF that supports onboarding, to ensure that the new AMF can start a deregistration timer. After the timer expires, the AMF triggers the deregistration procedure to deregister registration information of the terminal device on an ON-SNPN, and the PDU session release is triggered, to prevent the terminal device from camping on the ON-SNPN indefinitely.

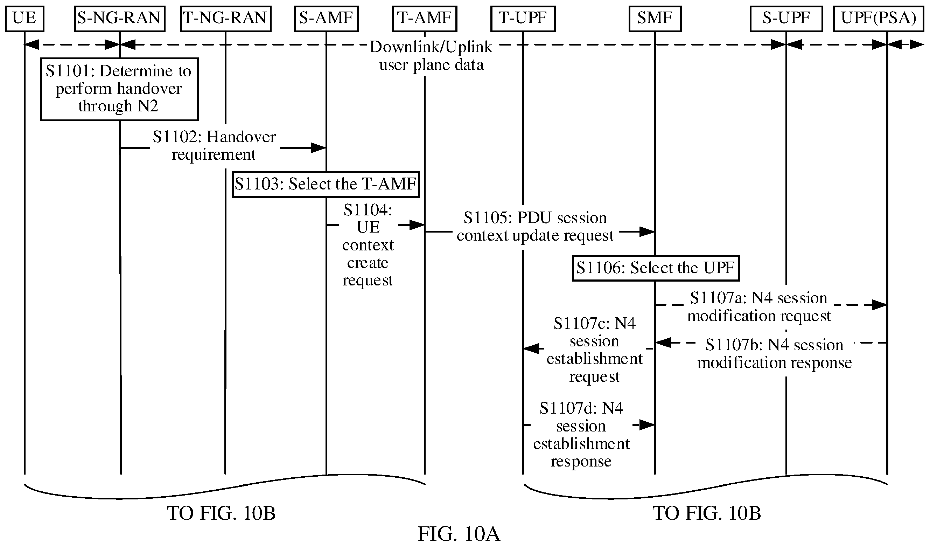

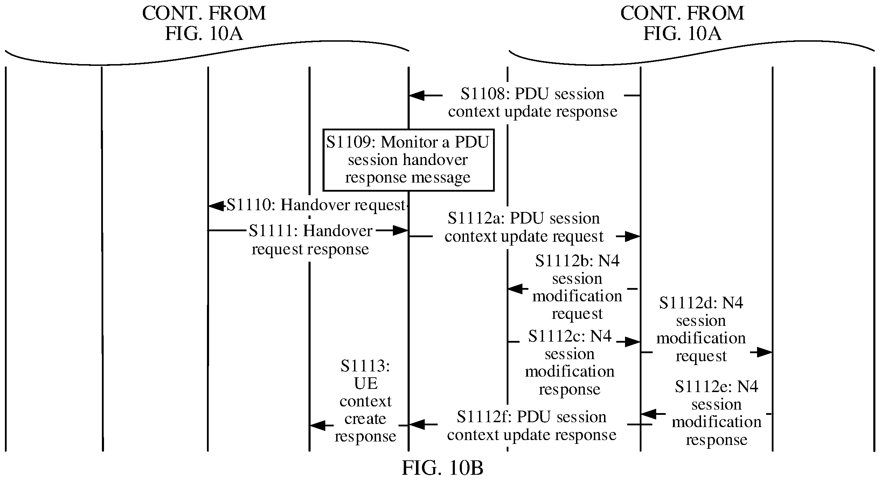

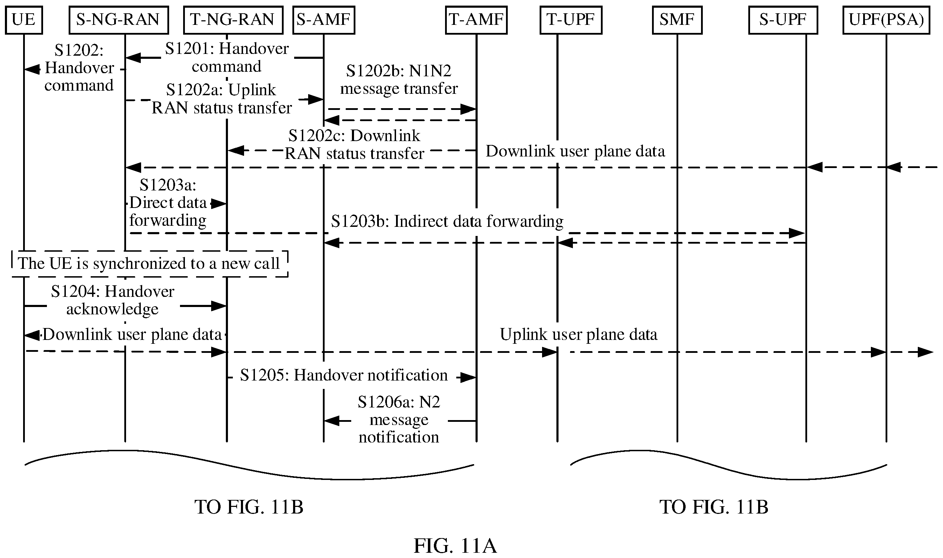

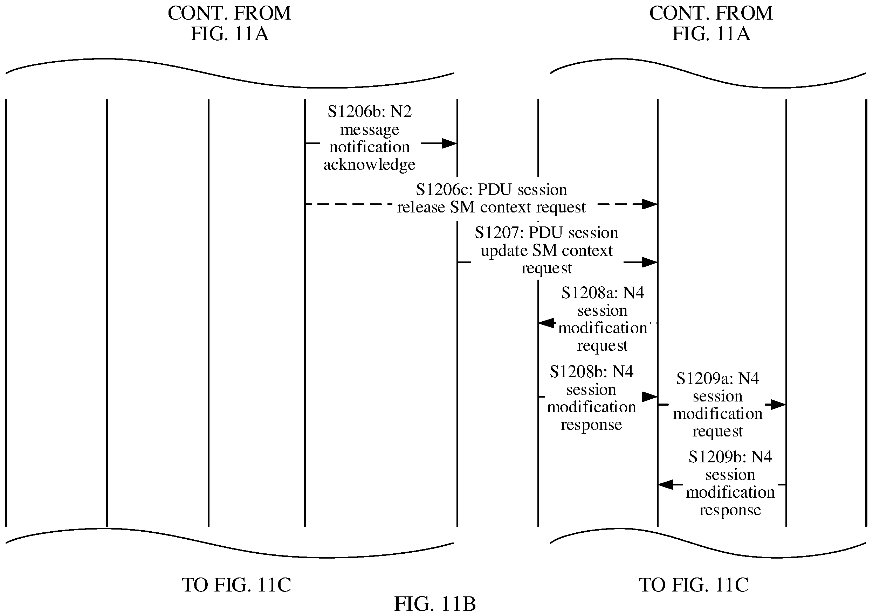

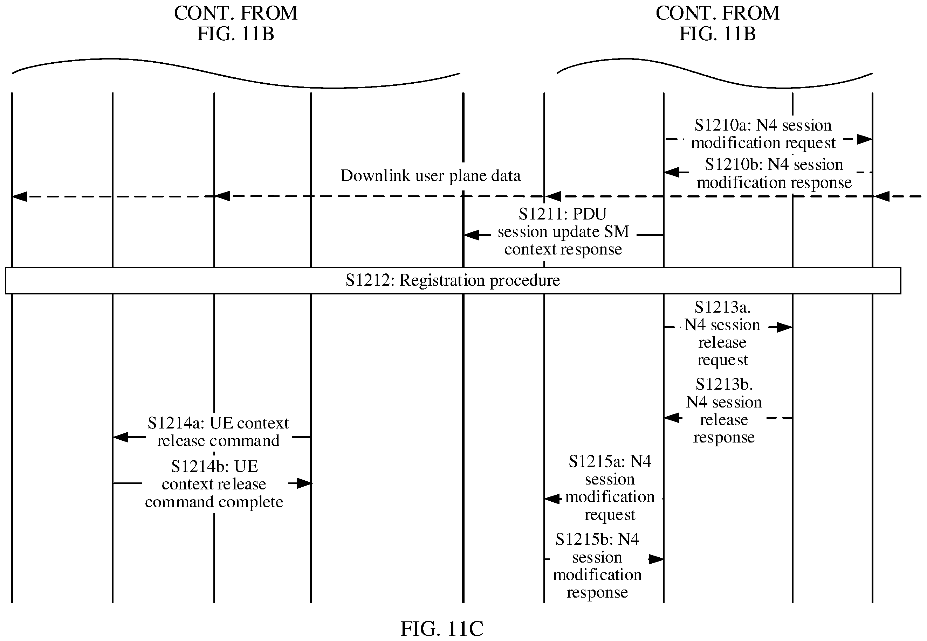

FIG. 10A and FIG. 10B are a schematic flowchart of another deregistration method at a handover preparation phase according to an embodiment of this application. FIG. 11A to FIG. 11C are a schematic flowchart of another deregistration method at a handover execution phase according to an embodiment of this application. The method may be applied to the system architectures in FIG. 1 to FIG. 3, or may be applied to the system architecture shown in FIG. 5. Embodiments of this application are not limited thereto.

S1101: An S-NG-RAN determines to perform handover through an N2 interface.

S1102: The S-NG-RAN sends a handover requirement message to an S-AMF.

S1103: The S-AMF selects a T-AMF.

Specifically, the S-AMF needs to first obtain onboarding indication information. The onboarding indication information indicates that a terminal device UE is performing onboarding registration. Optionally, the S-AMF may obtain the onboarding indication information by obtaining a UE context. Alternatively, the S-AMF may obtain the onboarding indication information by receiving an N2 message sent by the S-NG-RAN. Alternatively, the S-AMF may obtain the onboarding indication information based on information about a registration type of "SNPN onboarding", where the information about the registration type may be included in registration request information sent by the S-NG-RAN to the S-AMF. Alternatively, the S-AMF may obtain the onboarding indication information based on an N14 message sent by another AMF.

For example, the S-AMF may select the T-AMF based on the onboarding indication information in combination with local configuration information. It should be noted that if the S-AMF selects the T-AMF based on the local configuration information, information about whether an AMF supports onboarding needs to be preset in the local configuration before this step.

For another example, the S-AMF may alternatively select the T-AMF based on the onboarding indication information and by querying NRF information. It should be noted that, if the S-AMF selects the T-AMF based on the NRF information, information about whether an AMF supports onboarding needs to be configured in an NRF before this step.

S1104: The S-AMF sends a UE context create request message to the T-AMF.

Specifically, S1104 may be divided into S1104a and S1104b.

S1104a: The UE context create request message sent by the S-AMF to the T-AMF may carry time information of a first deregistration timer on the S-AMF or onboarding indication information. Specifically, the time information of the first deregistration timer on the S-AMF may include elapsed time of the first deregistration timer on the S-AMF. Alternatively, the time information of the first deregistration timer on the S-AMF may include remaining time of the first deregistration timer on the S-AMF.

Optionally, the S-AMF may determine, based on whether the S-AMF has started the deregistration timer, information carried in the UE context create request message sent to the T-AMF. Specifically, if the S-AMF has started the first deregistration timer, the UE context create request message sent to the T-AMF may carry the time information of the first deregistration timer on the S-AMF. Alternatively, if the S-AMF has not started the first deregistration timer, the UE context create request message sent to the T-AMF may carry the onboarding indication information.

Optionally, the T-AMF may subsequently start a second deregistration timer based on the received time information of the first deregistration timer on the S-AMF or the received onboarding indication information; starts the second deregistration timer, and continues to execute the remaining time of the first deregistration timer; stores the onboarding indication information in the UE context; or ignores the time information of the first deregistration timer on the S-AMF.

Optionally, an initial value of a deregistration timer may be set in a local configuration of each AMF. The initial value is total execution duration of the deregistration timer. The initial value also represents maximum duration that is allowed by an ON-SNPN to camp on the ON-SNPN by each terminal device registered for onboarding. For each mobility management network element supporting onboarding, initial values in local configuration information of the mobility management network elements are the same. If the time information of the first deregistration timer on the S-AMF is the elapsed time of the first deregistration timer on the S-AMF, the T-AMF calculates the remaining time based on the initial value and the elapsed time of the first deregistration timer.

S1104b: The UE context create request message sent by the S-AMF to the T-AMF does not carry information related to the deregistration timer.

Optionally, the T-AMF selected by the S-AMF supports onboarding, but the UE context create request message sent by the S-AMF to the T-AMF in S1104b does not carry the information related to the deregistration timer.

S1105: The T-AMF sends a PDU session context update request message to an SMF.

S1106: The SMF selects a UPF.

S1107: The SMF sends an N4 session modification request message to a PSA-UPF, and receives an N4 session modification response message from the PSA-UPF. The SMF sends an N4 session establishment request message to a T-UPF, and receives an N4 session establishment response message from the T-UPF.

S1108: The SMF sends a PDU session context update response message to the T-AMF.

S1109: The T-AMF monitors a PDU session handover response message.

S1110: The T-AMF sends a handover request message to a T-NG-RAN.

S1111: The T-AMF receives a handover request response message sent by the T-NG-RAN.

S1112: The T-AMF sends the PDU session context update request message to the SMF. The SMF sends the N4 session modification request message to the T-UPF, and receives the N4 session modification response message from the T-UPF. The SMF sends an N4 session modification request message to an S-UPF, and receives an N4 session modification response message from the S-UPF. The SMF sends the PDU session context update response message to the T-AMF.

S1113: The T-AMF sends a UE context create response message to the S-AMF.

In FIG. 11A to FIG. 11C, if the T-AMF supports onboarding, and the T-AMF is selected based on an existing mechanism in S1103, that is, selection of the T-AMF supporting onboarding is not based on the onboarding indication information, S1104 is S1104b. In this case, the UE context create response message in S1113 may carry onboarding capability information of the T-AMF, to indicate whether the T-AMF supports onboarding. Then, the S-AMF may include, based on the onboarding capability information of the T-AMF, the onboarding indication information or the time information of the first deregistration timer on the S-AMF in an N2 message notification acknowledge message sent by the S-AMF to the T-AMF in S1206.

Optionally, the S-AMF may determine, based on whether the S-AMF has started the first deregistration timer, information carried in the N2 message notification acknowledge message sent to the T-AMF. Specifically, if the S-AMF has started the first deregistration timer, the N2 message notification acknowledge message sent to the T-AMF carries the time information of the first deregistration timer on the S-AMF. If the S-AMF has not started the first deregistration timer, the N2 message notification acknowledge message sent to the T-AMF carries the onboarding indication information.

Optionally, the T-AMF supporting onboarding may subsequently start the second deregistration timer based on the received time information of the first deregistration timer on the S-AMF or the received onboarding indication information, or starts the second deregistration timer and continues to execute the remaining time of the first deregistration timer.

Optionally, the initial value of a deregistration timer is set in the local configuration of each AMF. The initial value is the total execution duration of the deregistration timer. The initial value also represents the maximum duration that is allowed by the ON-SNPN to camp on the ON-SNPN by each terminal device registered for onboarding. For each mobility management network element supporting onboarding, the initial values in the local configuration information of the mobility management network elements are the same. If the time information of the first deregistration timer on the S-AMF is the elapsed time of the deregistration timer on the S-AMF, the T-AMF calculates the remaining time based on the initial value and the elapsed time of the first deregistration timer.

For example, if the T-AMF selected by the S-AMF does not support onboarding, an N2 message notification acknowledge message sent to the T-AMF in S1206 may still carry the time information of the first deregistration timer on the S-AMF or the onboarding indication information.

Optionally, if the N2 message notification acknowledge message received by the T-AMF that does not support onboarding carries the time information of the first deregistration timer on the S-AMF, the T-AMF ignores the time information of the first deregistration timer on the S-AMF. If the N2 message notification acknowledge message received by the T-AMF that does not support onboarding carries the onboarding indication information, the T-AMF stores the onboarding indication information in the UE context, so that during next AMF redirection or AMF relocation, the onboarding indication information in the UE context is transferred to a subsequently new AMF.

It should be noted that, in some cases, if the S-AMF cannot select a T-AMF that supports onboarding, an existing registration procedure is performed, that is, the information related to the deregistration timer is not transferred in S1104a and S1206 in embodiments of this application. Optionally, during the next AMF redirection or AMF relocation, the onboarding indication information or the time information of the first deregistration timer on the S-AMF is transferred, in another manner, to the AMF that supports onboarding.

Other steps shown in FIG. 11A to FIG. 11C all belong to conventional technologies. For brevity, details are not described herein.

According to the deregistration method in embodiments of this application, the T-AMF supporting onboarding is selected, and the time information that is of the first deregistration timer on the S-AMF and that is of the S-AMF or the onboarding indication information is transferred to the T-AMF, to ensure that the deregistration timer can continue on the T-AMF. After the timer expires, the AMF triggers a deregistration procedure to deregister registration information of the terminal device on the ON-SNPN, and PDU session release is triggered, to prevent the terminal device from camping on the ON-SNPN indefinitely.

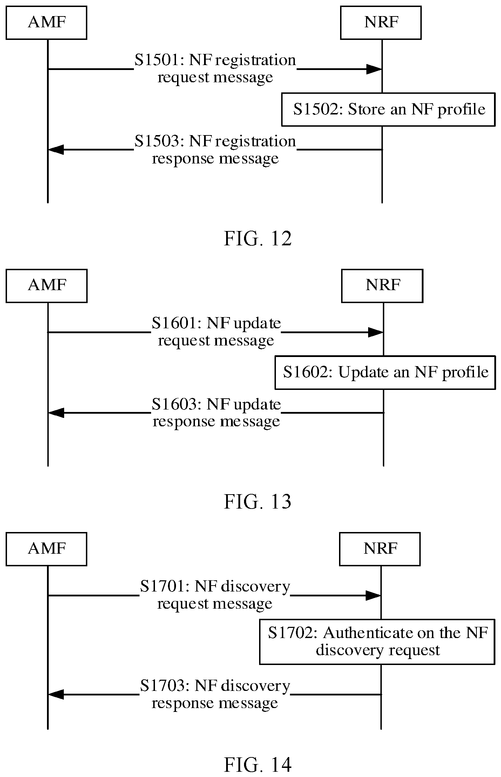

With reference to FIG. 12 to FIG. 14, the following describes in detail a process of configuring, in an NRF, information about whether an AMF supports onboarding and querying the NRF for instance information of an AMF supporting onboarding in S1103 in FIG. 10A.

FIG. 12 is a schematic flowchart of configuring onboarding capability information of an AMF in an NRF in still another deregistration method according to an embodiment of this application. The method in this embodiment of this application is used to add onboarding capability information of an AMF to an NF profile when the NF profile of the NRF does not include the onboarding capability information of the AMF.

S1501: The AMF sends an NF registration request message to the NRF.

Specifically, the NF registration request message carries identification information of the AMF and the onboarding capability information of the AMF. The onboarding capability information of the AMF indicates whether the AMF supports onboarding.

S1502: Store the NF profile.

Specifically, the NRF stores the identification information of the AMF and the onboarding capability information of the AMF in the NF profile.

S1503: The NRF sends an NF registration response message to the AMF.

In this embodiment of this application, the onboarding capability information of the AMF is added to the NF profile of the NRF by using the NF registration request message, so that the S-AMF in S1103 discovers and selects, by querying the NRF, a T-AMF that supports onboarding. In subsequent steps, onboarding indication information or time information that is of a first deregistration timer on the S-AMF and that is of the S-AMF is transferred to the T-AMF, to ensure that the deregistration timer can continue on the T-AMF. After the timer expires, the AMF triggers a deregistration procedure to deregister registration information of a terminal device on an ON-SNPN, and PDU session release is triggered, to prevent the terminal device from camping on the ON-SNPN indefinitely.

FIG. 13 is a schematic flowchart of updating onboarding capability information of an AMF in an NRF in still another deregistration method according to an embodiment of this application. The method in this embodiment of this application is used to update the onboarding capability information of the AMF in an NF profile of the NRF when the NF profile of the NRF includes the onboarding capability information of the AMF but whether the AMF supports onboarding changes.

S1601: The AMF sends an NF update request message to the NRF.

Specifically, the NF update request message may carry identification information of the AMF and the onboarding capability information of the AMF. The onboarding capability information of the AMF indicates whether the AMF supports onboarding.

S1602: Update the NF profile.

Specifically, the NRF updates the identification information of the AMF and the onboarding capability information of the AMF in the NF profile.

S1603: The NRF sends an NF update response message to the AMF.

Optionally, the identification information of the AMF may be a fully qualified domain name (Fully Qualified Domain Name, FQDN), a globally unique identifier (Globally Unique AMF Identifier, GUAMI), an IP address, or the like. This is not limited in this embodiment of this application.

In this embodiment of this application, the onboarding capability information of the AMF is updated in the NF profile of the NRF by using the NF update request message, so that the S-AMF in S1103 discovers and selects, by querying the NRF, a T-AMF that supports onboarding. In subsequent steps, onboarding indication information or time information that is of a first deregistration timer on the S-AMF and that is of the S-AMF is transferred to the T-AMF, to ensure that the deregistration timer can continue on the T-AMF. After the timer expires, the AMF triggers a deregistration procedure to deregister registration information of a terminal device on an ON-SNPN, and PDU session release is triggered, to prevent the terminal device from camping on the ON-SNPN indefinitely.

FIG. 14 is a schematic flowchart of querying an NRF for instance information of an AMF supporting onboarding in still another deregistration method according to an embodiment of this application.

S1701: The AMF sends an NF discovery request message to the NRF.

Specifically, the NF discovery request message may carry NF type information of the AMF and onboarding indication information. The onboarding indication information indicates that a terminal device is performing onboarding registration, or indicates that the terminal device is a terminal device registered for onboarding.

S1702: Authenticate the NF discovery request.

Specifically, the NRF authenticates the NF discovery request, and queries for an instance of the AMF supporting onboarding. The instance of the AMF includes an AMF file, including basic information of the AMF, for example, information such as an IP address and a provided service. In this way, the S-AMF can find an IP address of a T-AMF.

S1703: The NRF sends an NF discovery response message to the AMF. The NF discovery response message carries the instance information that is found in S1702 and that is of the AMF supporting onboarding.

In this embodiment of this application, the NRF is queried based on the discovery request for the instance information of the AMF supporting onboarding, so that the S-AMF in S1103 selects a T-AMF supporting onboarding. In subsequent steps, onboarding indication information or time information of a first deregistration timer on the S-AMF is transferred to the T-AMF, to ensure that the deregistration timer can continue on the T-AMF. After the timer expires, the AMF triggers a deregistration procedure to deregister registration information of a terminal device on an ON-SNPN, and PDU session release is triggered, to prevent the terminal device from camping on the ON-SNPN indefinitely.

Embodiments described in this specification may be independent solutions, or may be combined based on internal logic. These solutions all fall within the protection scope of this application.

It should be understood that, the serial numbers of the foregoing processes do not mean an execution sequence, and the execution sequence of the processes should be determined based on functions and inner logic of the processes, but not limit implementation processes of embodiments of this application.

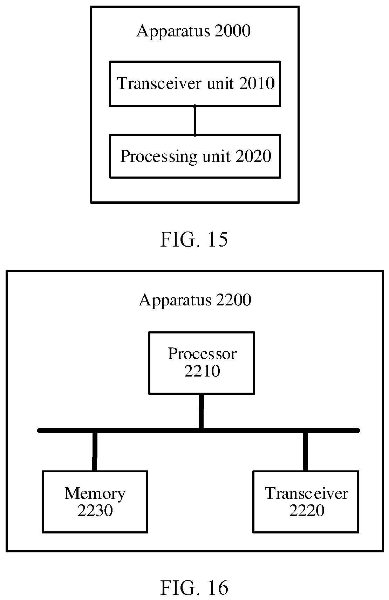

The methods provided in embodiments of this application are described above in detail with reference to FIG. 1 to FIG. 14. The following describes in detail communication apparatuses provided in embodiments of this application with reference to FIG. 15 and FIG. 16. It should be understood that descriptions of apparatus embodiments correspond to the descriptions of the method embodiments. Therefore, for content that is not described in detail, refer to the foregoing method embodiments. For brevity, details are not described herein again.

FIG. 15 is a schematic block diagram of a deregistration apparatus according to an embodiment of this application. The apparatus 2000 may include a transceiver unit 2010 and a processing unit 2020. The transceiver unit 2010 may implement a corresponding communication function, and the processing unit 2020 is configured to perform data processing. The transceiver unit 2010 may also be referred to as a communication interface or a communication unit.

Optionally, the apparatus 2000 may further include a storage unit. The storage unit may be configured to store instructions and/or data. The processing unit 2020 may read the instructions and/or the data in the storage unit, to enable the apparatus to implement the foregoing method embodiments.

The apparatus 2000 may be configured to perform actions performed by the network device in the foregoing method embodiments. In this case, the apparatus 2000 may be the network device or a component that can be configured in the network device, the transceiver unit 2010 is configured to perform receiving/sending-related operations of the network device in the foregoing method embodiments, and the processing unit 2020 is configured to perform processing-related operations of the network device in the foregoing method embodiments.

In a possible implementation, the apparatus 2000 is a first mobility management network element, and the transceiver unit 2010 and the processing unit 2020 can support actions completed by the first mobility management network element in the foregoing method examples. For example, the processing unit 2020 is configured to determine whether a second mobility management network element supports onboarding. The transceiver unit 2010 is configured to send a first message to the second mobility management network element. The first message carries first information, and the first information indicates the second mobility management network element to start a second deregistration timer.

For example, the processing unit 2020 determines, based on obtained onboarding capability information of the second mobility management network element, whether the second mobility management network element supports onboarding.

Optionally, the transceiver unit 2010 receives a second message sent by the second mobility management network element. The second message carries the onboarding capability information of the second mobility management network element. The processing unit 2020 determines, based on the onboarding capability information of the second mobility management network element, that the second mobility management network element supports onboarding.

It should be understood that the second message may be specifically a retrieve UE context request message or a UE context create response message. This is not limited in this application.

Optionally, the processing unit 2020 queries local configuration information, and determines, based on the onboarding capability information of the second mobility management network element in the local configuration information, that the second mobility management network element supports onboarding.

For another example, the processing unit 2020 selects, based on onboarding indication information, the second mobility management network element that supports onboarding.

Optionally, the processing unit 2020 may obtain the onboarding indication information based on a UE context.

Specifically, before obtaining the onboarding indication information from the UE context, the processing unit 2020 stores the onboarding indication information in the UE context based on the onboarding indication information obtained from an N2 or N14 message, or based on a registration type of "SNPN onboarding (SNPN onboarding)".

For example, the processing unit 2020 selects, by querying local configuration information based on received onboarding indication information, a second mobility management network element that supports onboarding.

For another example, the processing unit 2020 discovers and selects, by querying information of a network repository function network element based on received onboarding indication information, a second mobility management network element that supports onboarding.

Specifically, the transceiver unit 2010 sends a second request message to a network repository network element. The second request message indicates the network repository network element to search for an instance of a mobility management network element that supports onboarding. The transceiver unit 2010 receives a second response message sent by the network repository network element. The second response message carries instance information that is of the mobility management network element supporting onboarding and that is found by the network repository network element. The processing unit 2020 selects, based on the instance information of the mobility management network element, the second mobility management network element that supports onboarding.

For still another example, the first information carried in the first message sent by the transceiver unit 2010 to the second mobility management network element may be specifically the onboarding indication information. The onboarding indication information indicates that a terminal device is performing onboarding registration, or indicates that the terminal device is a terminal device registered for onboarding. Alternatively, the first information may be specifically time information of a first deregistration timer on the first mobility management network element. The time information of the first deregistration timer on the first mobility management network element indicates elapsed time or remaining time of the deregistration timer on the communication apparatus 2000.

Optionally, the processing unit 2020 is further configured to determine, based on whether the communication apparatus 2000 executes the deregistration timer, whether the first message sent by the transceiver unit 2010 to the second mobility management network element specifically carries the onboarding indication information or the time information of the first deregistration timer on the first mobility management network element. If the communication apparatus 2000 has not started the first deregistration timer, the first message transferred by the transceiver unit 2010 to the second mobility management network element carries the onboarding indication information. Alternatively, if the communication apparatus 2000 has started the deregistration timer, the first message transferred by the transceiver unit 2010 to the second mobility management network element carries the time information of the first deregistration timer on the first mobility management network element.

It should be understood that the first message may be specifically a retrieve UE context response message, a UE context establishment request message, or an N2 message notification acknowledge message. This is not limited in this embodiment of this application.

It should be noted that, when the terminal device moves after registration with an ON-SNPN for onboarding, an original mobility management network element cannot continue serving the terminal device. In this case, a new mobility management network element needs to be selected, that is, mobility management network element redirection is required. Optionally, the mobility management network element redirection process may occur in a mobility registration process of the terminal device, in other words, the terminal device is in an idle state. In this case, selection of the second mobility management network element is performed by an access network element, and the processing unit 2020 transmits the first information to the second mobility management network element only after determining that the second mobility management network element supports onboarding. Alternatively, the mobility management network element redirection process may occur in a handover process, in other words, the terminal device is in a connected state. In this case, selection of the second mobile network element is performed by the processing unit 2020. In this case, the processing unit 2020 can directly select the second mobility management network element that supports onboarding during the selection of the second mobility management network element, and transmits the first information to the second mobility management network element. That is, the additional step of determining whether the second mobility management network element supports onboarding is not required in this case.

It should be further noted that the terminal device may move to an area in which onboarding is not supported. That is, in this case, the second mobility management network element that supports onboarding cannot be selected. In this case, to ensure communication continuity, the access network element or the processing unit 2020 selects a second mobility management network element that does not support onboarding, and continues to perform an existing registration procedure; or the transceiver unit 2010 still sends the onboarding indication information or the time information of the first deregistration timer on the first mobility management network element to the second mobility management network element, but the second mobility management network element cannot start a second deregistration timer based on the foregoing information. In the foregoing two cases, when the terminal device moves to an area in which onboarding is supported, a mobility management network element that supports onboarding may be selected, and the first information may be transferred to the mobility management network element that supports onboarding.

In still another possible implementation, the apparatus 2000 is a second mobility management network element, and the transceiver unit 2010 and the processing unit 2020 can support actions completed by the second mobility management network element in the foregoing method examples. For example, the transceiver unit 2010 is further configured to receive a first message from a first mobility management network element. The first message may carry first information, and the first information may be specifically onboarding indication information or time information of a first deregistration timer on the first mobility management network element. The processing unit 2020 is configured to: determine whether the communication apparatus 2000 supports onboarding, and perform a subsequent operation based on the received first message and whether the communication apparatus 2000 supports onboarding.

It should be understood that the first message may be specifically a retrieve UE context response message, a UE context establishment request message, or an N2 message notification acknowledge message. This is not limited in this embodiment of this application.

For example, the processing unit 2020 determines that the communication apparatus 2000 supports onboarding, and the first information carried in the first message received by the transceiver unit 2010 is the time information of the first deregistration timer on the first mobility management network element. In this case, the processing unit 2020 starts a second deregistration timer based on the time information of the first deregistration timer on the first mobility management network element, and continues to execute remaining time of the first deregistration timer.

For another example, the processing unit 2020 determines that the communication apparatus 2000 supports onboarding, and the first message received by the transceiver unit 2010 carries the onboarding indication information. In this case, the processing unit 2020 starts the second deregistration timer based on the onboarding indication information.

For still another example, the processing unit 2020 determines that the communication apparatus 2000 does not support onboarding, and the first information carried in the first message received by the transceiver unit 2010 is the time information of the first deregistration timer on the first mobility management network element. In this case, the processing unit 2020 ignores the time information of the first deregistration timer on the first mobility management network element. In addition, when a mobility management network element is redirected or relocated next time, the first information is transferred to a mobility management network element that supports onboarding.

For still another example, if the processing unit 2020 determines that the communication apparatus 2000 does not support onboarding, and the first information carried in the first message received by the transceiver unit 2010 is the onboarding indication information, the processing unit 2020 stores the onboarding indication information in a UE context. In addition, when a mobility management network element is redirected or relocated next time, the first information is transferred, via the UE context, to a mobility management network element that supports onboarding.

For still another example, the transceiver unit 2010 is configured to send a second message to the first mobility management network element. The second message carries onboarding capability information of the second mobility management network element.

Specifically, the onboarding capability information of the second mobility management network element indicates whether the second mobility management network element supports onboarding. The second message may be a retrieve UE context request message or a UE context create response message, or may be another message carrying the onboarding capability information of the second mobility management network element. This is not limited in this embodiment of this application.

For still another example, the transceiver unit 2010 may be further configured to send an NF registration request message or an NF update request message to a network repository network element. The NF registration request message requests to register configuration information of the second mobility management network element with the network repository network element. The NF update request message requests to update the configuration information of the second mobility management network element to the network repository network element. The NF registration request message or the NF update request message carries identification information of the second mobility management network element and the onboarding capability information of the second mobility management network element. The transceiver unit 2010 is further configured to receive an NF registration response message or an NF update response message sent by the network repository network element. The NF registration response message or the NF update response message indicates that the network repository network element has accepted the NF registration request message or the NF update request message.

For still another example, the transceiver unit 2010 may be further configured to send a registration response message to a terminal device.

The apparatus 2000 may implement steps or procedures performed by the network device (for example, a mobility management network element AMF) in the methods according to embodiments of this application. The apparatus 2000 may include units configured to perform the methods performed by the network device (for example, the mobility management network element AMF) in FIG. 1 and FIG. 6 to FIG. 11C. In addition, the units in the apparatus 2000 and the foregoing other operations and/or functions are separately used to implement corresponding procedures of the method embodiments of the network device (for example, the mobility management network element AMF) in FIG. 1 and FIG. 6 to FIG. 11C.

It should be understood that a specific process in which the units perform the foregoing corresponding steps is described in detail in the foregoing method embodiments. For brevity, details are not described herein.

In still another possible implementation, the apparatus 2000 is a network repository network element, and the transceiver unit 2010 and the processing unit 2020 can support actions completed by the network repository network element in the foregoing method examples. For example, the transceiver unit 2010 is configured to receive a first request message sent by a mobility management network element. The transceiver unit 2010 is further configured to send a first response message to the mobility management network element. The processing unit 2020 is configured to store or update an NF profile of the network repository network element based on the first request message.

For example, the first request message is specifically an NF registration request message, and the first request message may carry identification information and onboarding capability information that are of the mobility management network element. The onboarding capability information indicates whether the mobility management network element supports onboarding. The processing unit 2020 is specifically configured to add, to the NF profile of the network repository network element, the identification information and the onboarding capability information that are of the mobility management network element and that are in the first request message. It should be understood that, in this example, the NF profile of the network repository network element originally does not include information related to onboarding of the mobility management network element.

For still another example, the first request message is specifically an NF update request message, and the first request message may carry identification information and onboarding capability information that are of the mobility management network element. The onboarding capability information indicates whether the mobility management network element supports onboarding. The processing unit 2020 is specifically configured to update, in the NF profile of the network repository network element, the identification information and the onboarding capability information that are of the mobility management network element and that are in the first request message. It should be understood that, in this example, the NF profile of the network repository network element originally includes the information related to onboarding of the mobility management network element, but a status in which the mobility management network element supports onboarding changes. In this case, related information about whether the mobility management network element supports onboarding is updated in the NF profile of the network repository network element by using the foregoing NF update request process.

For still another example, the transceiver unit 2010 may be further configured to receive a second request message sent by the mobility management network element. The second request message requests to search for an instance of a mobility management network element that supports onboarding, and the second request message may carry NF type information of the mobility management network element and onboarding indication information. The onboarding indication information indicates that a terminal device is performing onboarding registration, or indicates that the terminal device is a terminal device registered for onboarding. The processing unit 2020 is specifically configured to search for/find, based on the received second request message, the instance of the mobility management network element that supports onboarding. The transceiver unit 2010 is further configured to send a second response message to the mobility management network element. The second response message carries the found instance information of the mobility management network element.

Specifically, the second request message may be an NF discovery request message, and the second response message may be an NF discovery response message. Alternatively, the second request message and the second response message may be other messages. This is not limited in this embodiment of this application.

The apparatus 2000 may implement steps or procedures performed by a network device (for example, a network repository network element NRF) in the method embodiments according to embodiments of this application. The apparatus 2000 may include units configured to perform the methods performed by the network device (for example, the network repository network element NRF) in FIG. 12, FIG. 13, and FIG. 14. In addition, the units in the apparatus 2000 and the foregoing other operations and/or functions are separately used to implement corresponding procedures of the method embodiments of the network device in FIG. 12, FIG. 13, and FIG. 14.

It should be understood that a specific process in which the units perform the foregoing corresponding steps is described in detail in the foregoing method embodiments. For brevity, details are not described herein.

It should be understood that, the apparatus 2000 herein is presented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merge logic circuit, and/or another suitable component that supports the described function.

The apparatus 2000 in the foregoing solutions has a function of implementing corresponding steps performed by the first mobility management network element and the second mobility management network element in the foregoing methods. This function may be implemented by using hardware, or may be implemented by executing corresponding software by hardware. The hardware or the software includes one or more modules corresponding to the function. For example, the transceiver unit may be replaced with a transceiver, and another unit such as a determining unit may be replaced with a processor, to separately perform a sending and receiving operation and a related processing operation in the method embodiments.

In embodiments of this application, the apparatus in FIG. 15 may alternatively be a chip or a chip system, for example, a system on chip (system on chip, SoC). Correspondingly, a receiving unit and a sending unit may be a transceiver circuit of the chip. This is not limited herein.

It should be understood that the apparatus in FIG. 15 in embodiments of this application may be implemented by using a communication apparatus 2200 in FIG. 16, and may be configured to perform steps and/or procedures corresponding to the first mobile storage network element or the second mobility management network element in the foregoing method embodiments.

FIG. 16 shows another communication apparatus 2200 according to an embodiment of this application. The apparatus 2200 includes a processor 2210, a transceiver 2220, and a memory 2230. The processor 2210, the transceiver 2220, and the memory 2230 communicate with each other through an internal connection path. The memory 2230 is configured to store instructions, and the processor 2210 is configured to execute the instructions stored in the memory 2230, to control the transceiver 2220 to send a signal and/or receive a signal.

If the communication apparatus 2200 is a first mobility management network element, the processor 2210 is configured to determine whether a second mobility management network element supports onboarding. The transceiver 2220 is further configured to send a first message to the second mobility management network element. The first message may carry onboarding indication information. The onboarding indication information indicates that a terminal device is performing onboarding registration, or indicates that the terminal device is a terminal device registered for onboarding. Alternatively, the first message may carry time information of a first deregistration timer on the first mobility management network element. The time information of the first deregistration timer on the first mobility management network element indicates elapsed time or remaining time of the first deregistration timer on the communication apparatus 2000. The processor 2210 is further configured to: determine whether the first mobility management network element has started the first deregistration timer, and determine, based on a determining result, a type of information carried in the first message sent by the transceiver 2220.

If the communication apparatus 2200 is a second mobility management network element, the transceiver 2220 is configured to send a second message to a first mobility management network element. The second message carries onboarding capability information of the second mobility management network element. The transceiver 2220 is configured to receive a first message from the first mobility management network element. The first message may carry onboarding indication information or time information of a first deregistration timer on the first mobility management network element. The processor 2210 is configured to: determine whether the communication apparatus 2200 supports onboarding, and perform a subsequent operation based on the received first message and whether the communication apparatus 2200 supports onboarding.

If the communication apparatus 2200 is a network repository network element, the transceiver 2220 is configured to receive a first request message sent by a second mobility management network element. The first request message requests to register identification information and onboarding capability information that are of a mobility management network element in the network repository network element. Alternatively, the first request message requests to update the identification information and the onboarding capability information that are of the mobility management network element in the network repository network element. The transceiver 2220 is further configured to send a first response message to the second mobility management network element. The first response message indicates that the network repository network element has accepted the first request message. The processor 2210 is configured to store the identification information of the mobility management network element and the onboarding capability information of the second mobility management network element in an NF profile based on the first request message.

If the communication apparatus 2200 is an access network element, the transceiver 2220 is configured to receive a registration request message sent by a terminal. The registration request message carries onboarding indication information, and the onboarding indication information indicates that a terminal device is performing onboarding registration, or indicates that the terminal device is a terminal device registered for onboarding. The transceiver 2220 is further configured to send an N2 message to a second mobility management network element. The N2 message carries the onboarding indication information. The processor 2210 is configured to select the second mobility management network element based on the onboarding indication information.

Optionally, the memory 2230 may include a read-only memory and a random access memory, and provide instructions and data to the processor. A part of the memory may further include a non-volatile random access memory. For example, the memory may further store information about a device type. The processor 2210 may be configured to execute the instructions stored in the memory. In addition, when the processor 2210 executes the instructions stored in the memory, the processor 2210 is configured to perform steps and/or procedures corresponding to the network repository network element or the mobility management network element in the method embodiments.

It should be understood that the transceiver may include a transmitter and a receiver. The transceiver may further include one or more antennas. The memory may be an independent component, or may be integrated into a processor. All or some of the foregoing components may be integrated into a chip for implementation, for example, integrated into a baseband chip for implementation.

In this embodiment of this application, the transceiver in FIG. 16 may alternatively be a communication interface. This is not limited herein.

In embodiments of this application, for ease of understanding, a plurality of examples are used for description. However, these examples are only examples, and do not mean best implementations of this application.

In embodiments of this application, for ease of description, a request message, a response message, and names of various other messages are used. However, these messages are merely used as examples to describe content that needs to be carried or a function that needs to be implemented. Specific names of the messages are not limited in this application. For example, the messages may be a first message, a second message, and a third message. These messages may be some specific messages, or may be some fields in the messages. These messages may also represent various service operations.

It should be further understood that, in embodiments of this application, the processor in the foregoing apparatus may be a central processing unit (central processing unit, CPU), or the processor may be another general purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software unit. The software unit may be located in a mature storage medium in the art, for example, a random access memory, a flash memory, a read-only memory, a programmable read-only memory, an electrically erasable programmable memory, or a register. The storage medium is located in the memory. The processor executes the instructions in the memory, and completes the steps in the foregoing methods in combination with hardware of the processor. To avoid repetition, details are not described herein again.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and components displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to an existing technology, or all or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A deregistration method, comprising:
receiving a first message sent by a first mobility management network element, wherein the first message carries first information, and the first information is onboarding indication information or time information of a first deregistration timer on the first mobility management network element;
starting a second deregistration timer based on the first information; and
when the second deregistration timer expires, triggering a deregistration procedure to deregister a terminal device from a network.

2. The method according to claim 1, wherein when the first information is the time information of the first deregistration timer on the first mobility management network element, the first information indicates elapsed time of the first deregistration timer on the first mobility management network element, or indicates remaining time of the first deregistration timer on the first mobility management network element.

3. The method according to claim 2, wherein when the first information indicates the remaining time of the first deregistration timer on the first mobility management network element, the starting a second deregistration timer based on the first information comprises:
starting the second deregistration timer based on the remaining time of the first deregistration timer on the first mobility management network element.

4. The method according to claim 2, wherein when the first information indicates the elapsed time of the first deregistration timer on the first mobility management network element, the starting a second deregistration timer based on the first information comprises:
determining the remaining time of the first deregistration timer on the first mobility management network element based on the time information of the first deregistration timer on the first mobility management network element and a local configuration; and
starting the second deregistration timer based on the remaining time of the first deregistration timer on the first mobility management network element.

5. The method according to claim 1, wherein when the first information is the onboarding indication information, the onboarding indication information indicates that the terminal device is performing onboarding registration, or indicates that the terminal device is a terminal device registered for onboarding.

6. The method according to any one of claims 1 to5, wherein if the method is performed by a second mobility management network element, before the receiving a first message sent by a first mobility management network element, the method further comprises:
sending a second message to the first mobility management network element, wherein the second message carries onboarding capability information of the second mobility management network element, and the onboarding capability information of the second mobility management network element indicates whether the second mobility management network element supports onboarding.

7. The method according to claim 6, wherein when the first information is the time information of the first deregistration timer on the first mobility management network element, before the sending a second message to the first mobility management network element, the method further comprises:
receiving an N2 message sent by an access network element, wherein the N2 message carries the onboarding indication information, and the onboarding indication information indicates that the terminal device is performing the onboarding registration, or indicates that the terminal device is the terminal device registered for onboarding; and
sending the second message to the first mobility management network element based on the onboarding indication information.

8. The method according to any one of claims 1 to 7, wherein the method further comprises:
sending a first request message to a network repository network element, wherein the first request message requests to register identification information and onboarding capability information that are of a mobility management network element in the network repository network element, or the first request message requests to update the identification information and the onboarding capability information that are of the mobility management network element in the network repository network element; and
receiving a first response message sent by the network repository network element, wherein the first response message indicates that the network repository network element has accepted the first request message.

9. A deregistration method, comprising:
determining that a second mobility management network element supports onboarding; and
sending a first message to the second mobility management network element, wherein the first message carries first information, and the first information is onboarding indication information or time information of a first deregistration timer on a first mobility management network element.

10. The method according to claim 9, wherein
the first information is the onboarding indication information, and the onboarding indication information indicates that a terminal device is performing onboarding registration, or indicates that the terminal device is a terminal device registered for onboarding.

11. The method according to claim 9, wherein
the first information is the time information of the first deregistration timer on the first mobility management network element, and the first information indicates elapsed time of the first deregistration timer on the first mobility management network element, or indicates remaining time of the first deregistration timer on the first mobility management network element.

12. The method according to any one of claims 9 to 11, wherein the determining that a second mobility management network element supports onboarding comprises:
receiving a second message sent by the second mobility management network element, wherein the second message carries onboarding capability information of the second mobility management network element; and
determining, based on the onboarding capability information of the second mobility management network element, that the second mobility management network element supports onboarding.

13. The method according to any one of claims 9 to1, wherein the determining that a second mobility management network element supports onboarding comprises:
determining, based on local configuration information, that the second mobility management network element supports onboarding.

14. The method according to any one of claims 9 to 11, wherein the determining that a second mobility management network element supports onboarding further comprises:
obtaining the onboarding indication information, wherein the onboarding indication information indicates that the terminal device is performing the onboarding registration, or indicates that the terminal device is the terminal device registered for onboarding; and
selecting, based on the onboarding indication information, the second mobility management network element that supports onboarding.

15. The method according to claim 14, wherein the selecting, based on the onboarding indication information, the second mobility management network element that supports onboarding comprises:
selecting, based on the onboarding indication information and a local configuration, the second mobility management network element that supports onboarding.

16. The method according to claim 14, wherein the selecting, based on the onboarding indication information, the second mobility management network element that supports onboarding comprises:
sending a second request message to a network repository network element, wherein the second request message carries the onboarding indication information, and the second request message requests to search the network repository network element for instance information of a mobility management network element supporting onboarding;
receiving a second response message sent by the network repository network element, wherein the second response message carries the instance information that is of the mobility management network element supporting onboarding and that is found by the network repository network element, and the instance information of the mobility management network element supporting onboarding comprises instance information of the second mobility management network element; and
selecting the second mobility management network element from the instance information of the mobility management network element supporting onboarding.

17. The method according to any one of claims 14 to 16, wherein the obtaining the onboarding indication information comprises:
obtaining the onboarding indication information from a UE context.

18. The method according to claim 17, wherein before the obtaining the onboarding indication information from a UE context, the method further comprises:
storing the onboarding indication information in the UE context based on the onboarding indication information obtained from an N2 or N14 message, or based on a registration type of "SNPN onboarding (SNPN onboarding)".

19. A deregistration method, comprising:
receiving a first request message sent by a second mobility management network element, wherein the first request message requests to register identification information and onboarding capability information that are of a mobility management network element in a network repository network element, or the first request message requests to update the identification information and the onboarding capability information that are of the mobility management network element in the network repository network element;
storing the identification information of the mobility management network element and onboarding capability information of the second mobility management network element in an NF profile based on the first request message; and
sending a first response message to the second mobility management network element, wherein the first response message indicates that the network repository network element has accepted the first request message.

20. The method according to claim 19, wherein the method further comprises:
receiving a second request message sent by a first mobility management network element, wherein the second request message requests to search the network repository network element for instance information of a mobility management network element supporting onboarding;
querying, based on the second request message, the NF profile for the instance information of the mobility management network element supporting onboarding, wherein the instance information of the mobility management network element supporting onboarding comprises instance information of the second mobility management network element; and
sending a second response message to the first mobility management network element, wherein the second response message carries the instance information that is of the mobility management network element supporting onboarding and that is found by the network repository network element.

21. A deregistration method, comprising:
receiving a third message, wherein the third message carries onboarding indication information, and the onboarding indication information indicates that a terminal device is performing onboarding registration, or indicates that the terminal device is a terminal device registered for onboarding;
selecting a second mobility management network element based on the onboarding indication information; and
sending an N2 message to the second mobility management network element, wherein the N2 message carries the onboarding indication information.

22. A communication apparatus, comprising:
a transceiver unit, configured to receive a first message sent by a first mobility management network element, wherein the first message carries first information, and the first information is onboarding indication information or time information of a first deregistration timer on the first mobility management network element; and
a processing unit, configured to: start a second deregistration timer based on the first information; and when the second deregistration timer expires, trigger a deregistration procedure to deregister a terminal device from a network.

23. The communication apparatus according to claim 22, wherein when the first information is the time information of the first deregistration timer on the first mobility management network element, the first information indicates elapsed time of the first deregistration timer on the first mobility management network element, or indicates remaining time of the first deregistration timer on the first mobility management network element.

24. The communication apparatus according to claim 23, wherein when the first information indicates the remaining time of the first deregistration timer on the first mobility management network element, that the processing unit starts the second deregistration timer based on the time information of the first deregistration timer on the first mobility management network element comprises:
starting the second deregistration timer based on the remaining time of the first deregistration timer on the first mobility management network element.

25. The communication apparatus according to claim 23, wherein when the first information indicates the elapsed time of the first deregistration timer on the first mobility management network element, that the processing unit starts the second deregistration timer based on the time information of the first deregistration timer on the first mobility management network element comprises:
determining the remaining time of the first deregistration timer on the first mobility management network element based on the time information of the first deregistration timer on the first mobility management network element and a local configuration; and
starting the second deregistration timer based on the remaining time of the first deregistration timer on the first mobility management network element.

26. The communication apparatus according to claim 22, wherein when the first information is the onboarding indication information, the onboarding indication information indicates that the terminal device is performing onboarding registration, or indicates that the terminal device is a terminal device registered for onboarding.

27. The communication apparatus according to any one of claims 22 to 26, wherein the communication apparatus is a second mobility management network element, and before receiving a first message sent by a first mobility management network element, the transceiver unit is further configured to:
send a second message to the first mobility management network element, wherein the second message carries onboarding capability information of the second mobility management network element, and the onboarding capability information of the second mobility management network element indicates whether the second mobility management network element supports onboarding.

28. The communication apparatus according to claim 27, wherein when the first information is the time information of the first deregistration timer on the first mobility management network element, before sending a second message to the first mobility management network element, the transceiver unit is further configured to:
receive an N2 message sent by an access network element, wherein the N2 message carries the onboarding indication information, and the onboarding indication information indicates that the terminal device is performing the onboarding registration, or indicates that the terminal device is the terminal device registered for onboarding; and
send the second message to the first mobility management network element based on the onboarding indication information.

29. The communication apparatus according to any one of claims 22 to 28, wherein the transceiver unit is configured to:
send a first request message to a network repository network element, wherein the first request message requests to register identification information and onboarding capability information that are of a mobility management network element in the network repository network element, or the first request message requests to update the identification information and the onboarding capability information that are of the mobility management network element in the network repository network element; and
receive a first response message sent by the network repository network element, wherein the first response message indicates that the network repository network element has accepted the first request message.

30. A communication apparatus, comprising:
a processing unit, configured to determine that a second mobility management network element supports onboarding; and
a transceiver unit, configured to send a first message sent to the second mobility management network element, wherein the first message carries first information, and the first information is onboarding indication information or time information of a first deregistration timer on the first mobility management network element.

31. The communication apparatus according to claim 30, wherein
the first information is the onboarding indication information, and the onboarding indication information indicates that a terminal device is performing onboarding registration, or indicates that the terminal device is a terminal device registered for onboarding.

32. The communication apparatus according to claim 30, wherein
the first information is the time information of the first deregistration timer on the first mobility management network element, and the first information indicates elapsed time of the first deregistration timer on the first mobility management network element, or indicates remaining time of the first deregistration timer on the first mobility management network element.

33. The communication apparatus according to any one of claims 30 to 32, wherein that the processing unit determines that the second mobility management network element supports onboarding comprises:
receiving, by the transceiver unit, a second message sent by the second mobility management network element, wherein the second message carries onboarding capability information of the second mobility management network element; and
determining, based on the onboarding capability information of the second mobility management network element, that the second mobility management network element supports onboarding.

34. The communication apparatus according to any one of claims 30 to 32, wherein that the processing unit determines that the second mobility management network element supports onboarding comprises:
determining, based on local configuration information, that the second mobility management network element supports onboarding.

35. The communication apparatus according to any one of claims 30 to 32, wherein that the processing unit determines that the second mobility management network element supports onboarding further comprises:
obtaining the onboarding indication information, wherein the onboarding indication information indicates that the terminal device is performing the onboarding registration, or indicates that the terminal device is the terminal device registered for onboarding; and
selecting, based on the onboarding indication information, the second mobility management network element that supports onboarding.

36. The communication apparatus according to claim 35, wherein that the processing unit selects, based on the onboarding indication information, the second mobility management network element that supports onboarding comprises:
selecting, based on the onboarding indication information and the local configuration, the second mobility management network element that supports onboarding.

37. The communication apparatus according to claim 35, wherein that the processing unit selects, based on the onboarding indication information, the second mobility management network element that supports onboarding comprises:
sending a second request message to a network repository network element, wherein the second request message carries the onboarding indication information, and the second request message requests to search the network repository network element for instance information of a mobility management network element supporting onboarding;
receiving a second response message sent by the network repository network element, wherein the second response message carries the instance information that is of the mobility management network element supporting onboarding and that is found by the network repository network element, and the instance information of the mobility management network element supporting onboarding comprises instance information of the second mobility management network element; and
selecting the second mobility management network element from the instance information of the mobility management network element supporting onboarding.

38. The communication apparatus according to any one of claims 35 to 37, wherein that the processing unit obtains the onboarding indication information comprises:
obtaining the onboarding indication information from a UE context.

39. The communication apparatus according to claim 38, wherein before obtaining the onboarding indication information from the UE context, the processing unit is further configured to:
store the onboarding indication information in the UE context based on the onboarding indication information obtained from an N2 or N14 message, or based on a registration type of "SNPN onboarding (SNPN onboarding)".

40. A communication apparatus, comprising:
a transceiver unit, configured to: receive a first request message sent by a second mobility management network element, wherein the first request message requests to register identification information and onboarding capability information that are of a mobility management network element in a network repository network element, or the first request message requests to update the identification information and the onboarding capability information that are of the mobility management network element in the network repository network element; and send a first response message to the second mobility management network element, wherein the first response message indicates that the network repository network element has accepted the first request message; and
a processing unit, configured to store the identification information of the mobility management network element and onboarding capability information of the second mobility management network element in an NF profile based on the first request message.

41. The communication apparatus according to claim 40, wherein the processing unit is further configured to:
query, based on the NF profile, for instance information of a mobility management network element supporting onboarding, wherein the instance information of the mobility management network element supporting onboarding comprises instance information of the second mobility management network element.

42. The communication apparatus according to claim 40, wherein the transceiver unit is further configured to:
send a second response message to the first mobility management network element, wherein the second response message carries the instance information that is of the mobility management network element supporting onboarding and that is found by the network repository network element; and
receive a second request message sent by the first mobility management network element, wherein the second request message requests to search the network repository network element for the instance information of the mobility management network element supporting onboarding.

43. A communication apparatus, comprising:
a transceiver unit, configured to: receive a third message, wherein the third message carries onboarding indication information, and the onboarding indication information indicates that a terminal device is performing onboarding registration, or indicates that the terminal device is a terminal device registered for onboarding; and send an N2 message to a second mobility management network element, wherein the N2 message carries the onboarding indication information; and
a processing unit, configured to select the second mobility management network element based on the onboarding indication information.

44. A communication apparatus, comprising:
a transceiver, configured to receive and send a message;
a memory, configured to store a computer program; and
a processor, configured to execute the computer program stored in the memory, to enable the apparatus to perform the method according to any one of claims 1 to 21, wherein the processor is coupled to the memory.

45. A computer-readable storage medium, storing a computer program, wherein when the computer program is executed by a computer, the method according to any one of claims 1 to 21 is implemented.
